(19) **Europäisches Patentamt / European Patent Office / Office européen des brevets**

(11) **EP 1 977 459 B1**

(12) **FASCICULE DE BREVET EUROPEEN**

(45) Date de publication et mention
de la délivrance du brevet:
**28.07.2010 Bulletin 2010/30**

(21) Numéro de dépôt: **07703935.2**

(22) Date de dépôt: **17.01.2007**

(51) Int Cl.:
***H01L 41/113*** (2006.01)

(86) Numéro de dépôt international:
**PCT/EP2007/050435**

(87) Numéro de publication internationale:
**WO 2007/082894 (26.07.2007 Gazette 2007/30)**

(54) **PROCEDE ET DISPOSITIF DE CONVERSION D'ÉNERGIE MECANIQUE EN ENERGIE ELECTRIQUE**

VERFAHREN UND VORRICHTUNG ZUR UMWANDLUNG MECHANISCHER ENERGIE IN ELEKTRISCHE ENERGIE

METHOD AND DEVICE FOR CONVERTING MECHANICAL ENERGY INTO ELECTRICAL ENERGY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.01.2006 FR 0650234**

(43) Date de publication de la demande:
**08.10.2008 Bulletin 2008/41**

(73) Titulaire: **Commissariat à l'Énergie Atomique et aux Énergies Alternatives**
**75015 Paris (FR)**

(72) Inventeurs:
• **DESPESSE, Ghislain**
  **F-38120 Saint Egreve (FR)**
• **JAGER, Thomas**
  **F-38000 Grenoble (FR)**
• **CHAILLOUT, Jean-Jacques**
  **F-38960 Saint-etienne-de-crossey (FR)**

(74) Mandataire: **Ilgart, Jean-Christophe et al
Brevalex
3, rue du Docteur Lancereaux
75008 Paris (FR)**

(56) Documents cités:
EP-A- 1 050 955          WO-A-2006/046938
US-A- 2 814 660          US-A1- 2001 035 723
US-A1- 2005 093 302

• JIFENG HAN ET AL: "Novel power conditioning circuits for piezoelectric micro power generators" APPLIED POWER ELECTRONICS CONFERENCE AND EXPOSITION, 2004. APEC '04. NINETEENTH ANNUAL IEEE ANAHEIM, CA, USA 22-26 FEB. 2004, PISCATAWAY, NJ, USA, IEEE, vol. 3, 22 février 2004 (2004-02-22), pages 1541-1546, XP010703521 ISBN: 0-7803-8269-2
• LEFEUVRE E ET AL: "A comparison between several approaches of piezoelectric energy harvesting" JOURNAL DE PHYSIQUE IV (PROCEEDINGS) EDP SCIENCES FRANCE, vol. 128, septembre 2005 (2005-09), pages 177-186, XP009069245 ISSN: 1155-4339
• SCOTT MENINGER ET AL: "Vibration-to-Electric Energy Conversion" IEEE TRANSACTIONS ON VERY LARGE SCALE INTEGRATION (VLSI) SYSTEMS, IEEE SERVICE CENTER, PISCATAWAY, NJ, US, vol. 9, no. 1, février 2001 (2001-02), XP011063135 ISSN: 1063-8210 cité dans la demande

**Description**

**Description pour les Etats contractants suivants : AT, BE, BG, CH, CG, CZ, DK, EE, ES, FI, GB, GR, HU, IE, IS, LI, LT, LU, LV, MC, NL, PL, PT, RO, SE, SI SK, TR**

## DOMAINE TECHNIQUE ET ART ANTÉRIEUR

La présente invention se rapporte principalement à un procédé et un dispositif de conversion d'énergie mécanique, notamment vibratoire en énergie électrique à rendement amélioré.

Il est connu, par exemple du document «Vibration-to-Electric Energy Conversion », Meninger, S. ; Mure-Miranda, J. O. ; Amirtharajah, R. ; Chandrakasan, A. ; Lang, JH ; Very Scale Integration (VLSI) Systems, IEEE Transactions on, Volume 9, Issue 1, Feb. 2001 Page(s): 64-76, un dispositif de récupération d'énergie mécanique sous forme de vibration en énergie électrique, comportant une pluralité de condensateurs à capacité variable, formé par deux éléments en regard portés respectivement par un peigne fixe et un peigne mobile, le peigne mobile étant mis en mouvement sous l'effet, des vibrations extérieures et modifiant l'entrefer entre les deux éléments et ainsi la capacité des condensateurs.

Ainsi en générant des forces électrostatiques entre les armatures du condensateur, il est possible de récupérer une énergie électrique.

Il est également connu d'utiliser un matériau piézo-électrique pour transformer une énergie mécanique en énergie électrique, l'énergie mécanique provoquant la déformation du matériau piézoélectrique et l'apparition de charges électriques dans le matériau, qui peuvent être récupérées.

Cette récupération par des moyens électrostatiques ou piézoélectriques n'est pas optimale.

D'ailleurs, il est connu du document «Novel Power Circuits for Piezoelectric Micro Power Generators», Jifeng Han et al., Applied Power Electronics Conference and Exposition, 2004. APEC '04. Nineteenth Annual IEEE Anaheim, CA, USA 22-26 Feb. 2004, vol. 3, p. 1541-1546, un dispositif de récupération d'énergie mécanique comportant une pluralité de condensateurs à capacité fixe dont la capacité totale est varié par un circuit qui comporte des interrupteurs.

C'est par conséquent un but de la présente invention d'offrir un procédé de récupération d'énergie électrique à partir d'une énergie mécanique à rendement augmenté par rapport aux procédés de l'état de la technique.

C'est également un but de la présente invention d'offrir un dispositif pour convertir de manière optimisée une énergie mécanique en une énergie électrique

## EXPOSÉ DE L'INVENTION

Les buts précédemment, énoncés sont atteints par un dispositif de conversion d'énergie tel que défini par la revendication 11 comportant des moyens piézoélectriques aptes à convertir une énergie mécanique en une énergie électrique, associés à des moyens électrostatiques amplifiant l'énergie électrique produite par les moyens piézoélectriques et le procédé défini par la revendication 1.

En d'autres termes, le dispositif de conversion associe un élément piézoélectrique et un condensateur à capacité variable, les charges générées par l'élément piézoélectrique lors de sa déformation sont transmises au condensateur, qui par variation de sa capacité va amplifier l'énergie électrique produite par l'élément piézoélectrique.

La variation de la capacité est obtenue par déplacement relatif des armatures du condensateur. Lors de la diminution de la capacité du condensateur, la charge électrique crée des forces électrostatiques tendant à freiner le mouvement des armatures du condensateur, transformant ainsi une partie de l'énergie mécanique en énergie électrique. Ainsi l'énergie électrique produite par l'élément piézoélectrique lors de sa déformation est amplifiée lors de la diminution de la capacité du condensateur.

De manière avantageuse, la structure de conversion d'énergie mécanique en énergie électrique combine les principes de conversion électrostatique et piézoélectrique de manière synchronisée. En effet si lors de la déformation de l'élément piézoélectrique, il se produit une variation de capacité, il est possible d'amplifier par la structure électrostatique l'énergie acquise par l'élément piézoélectrique, puis éventuellement de la réinjecter vers l'élément piézoélectrique pour subir une succession d'amplification. A chaque phase d'amplification, une force de freinage (électrostatique ou piézoélectrique) apparaît ; elle est à chaque fois plus importante et permet ainsi de convertir plus d'énergie mécanique en énergie électrique.

La variation de capacité mécanique utilisée par l'invention n'est pas une simple variation de capacité telle que l'on pourrait l'avoir avec des capacités commutées, mais un acte de transduction d'énergie mécanique en énergie électrique. En effet, la commutation de capacité connue dans l'état de la technique permet d'élever le potentiel électrique d'une source d'énergie électrique, mais aucunement son niveau d'énergie. En effet, l'augmentation de la tension induit une baisse du courant de sortie entretenant une puissance moyenne de sortie égale à la puissance moyenne d'entrée, le produit tension-courant restant constant, il s'agit d'une conversion électrique/électrique d'énergie et aucunement d'une conversion mécanique/électrique. Par contre, grâce à la présente invention, avec une diminution par déformation mécanique de capacité, non seulement le potentiel électrique est augmenté, mais aussi l'énergie électrique stockée ; l'énergie mécanique apportée pour déformer la capacité est en fait transformée en énergie électrique amplifiant ainsi l'énergie électrique initialement stockée dans la capacité.

Avec une diminution de capacité par déformation mécanique, l'énergie électrique est amplifiée, alors qu'avec un système à capacité commutée tel que décrit sur le document EP 1 050 955, seule la tension est amplifiée. Dans le cas de l'invention, lorsque la capacité mécanique se déforme et diminue en valeur alors que la charge stockée Q sur ses électrodes reste constante (circuit temporairement ouvert), la tension U, qui est égale à la charge stockée Q divisée par la valeur de la capacité C, augmente, de même, l'énergie électrique stockée $E_{capa} = \frac{1}{2}QU$ augmente quand U augmente, c'est à dire quand C diminue.

$$E_{capa} = \frac{1}{2}CU^2 = \frac{1}{2}QU = \frac{Q^2}{2C}$$

Donc lorsque Q est constante et la capacité C diminue, $E_{capa}$ augmente.

Un système à capacité commuté, qui fait par exemple transiter des capacités de parallèle en série a un comportement différent d'une variation de capacité par variation mécanique. En effet, lorsque les capacités sont en parallèle, la charge est répartie sur toutes les capacités, leur mise en série ne modifie en rien cette répartition, la capacité équivalente a bien diminuée, mais on ne retrouve qu'une partie de la charge sur les bornes externes.

Une mise en série de dix capacités identiques pré-chargées conduit à une tension multipliée par 10, mais aussi à une charge équivalente divisée 10 et à une énergie stockée $\frac{1}{2}QU$ inchangée. Ce qui est normale puisque aucune énergie extérieure n'a été apportée au système.

Dans le cadre de la présente invention, l'énergie convertie par la variation mécanique de capacité est donc significative par rapport à l'énergie convertie par l'élément piézoélectrique.

De préférence, à un extremum de capacité de l'élément électrostatique correspond un extremum de tension aux bornes de l'élément piézoélectrique. A l'aide de moyens électroniques simples, ceci permet de façon efficace de transférer à l'élément électrostatique l'énergie convertie par l'élément piézoélectrique au moment où la valeur de capacité est maximale. Cette énergie est ensuite amplifiée durant la phase où la capacité diminue.

En effet, si en plus de la synchronisation entre la conversion électrostatique et la conversion piézoélectrique, à chaque extremum de capacité sur la structure électrostatique il se produit un extremum de déformation de l'élément piézoélectrique, alors ces phases d'amplification peuvent s'effectuer de manière optimisée. Pour cela il suffit de transférer, lorsque la déformation est maximale, l'énergie potentielle électrique stockée dans l'élément piézoélectrique vers la structure électrostatique qui est à une valeur capacitive maximale. Ensuite, pendant que la structure électrostatique passe de sa valeur capacitive maximale à sa valeur minimale, il y a augmentation de l'énergie potentielle électrique au sein de cette structure. Lorsque cette énergie potentielle est maximale, soit elle est transférée vers un circuit de stockage (batterie) soit elle est réinjectée dans l'élément piézoélectrique pour quelle soit à nouveau amplifiée.

Le système peut servir à récupérer l'énergie de vibration mécanique dans des milieux courant (voiture, machine outil, etc...), de l'ordre de quelques microwatts par gramme de masse mobile avec un rendement de l'ordre de 20 %.

Le dispositif selon la présente invention permet, en outre, de manière avantageuse de pouvoir démarrer sans que cela nécessite une source d'énergie électrique initiale, tout en ayant les avantages des structures électrostatiques en terme de couplage mécanique/électrique en petite dimension.

La présente invention a alors principalement pour objet un procédé de conversion d'énergie mécanique en énergie électrique, au moyen d'au moins un élément piézoélectrique et d'au moins un condensateur à capacité variable, ledit procédé comportant les étapes définies par la revendication 1.

De manière avantageuse, la déformation de l'élément piézoélectrique et la modification de la capacité du condensateur sont simultanées.

En outre, de manière également très avantageuse, la déformation de l'élément piézoélectrique est maximale lorsque la capacité du condensateur est maximale.

La capacité est modifiée par déformation mécanique du condensateur. L'élément piézoélectrique et le condensateur peuvent alors être déformés par une même contrainte mécanique.

On peut prévoir qu'une partie de l'énergie électrique convertie par le condensateur soit transmise à l'élément piézoélectrique.

Les charges peuvent également être transférées vers un premier ou un deuxième condensateur en fonction d'une direction de déformation de l'élément piézoélectrique.

Il peut également être prévu, lorsqu'une tension à des bornes de l'élément piézoélectrique est maximale, que son signe soit inversé pour créer une force de freinage mécanique permettant d'augmenter l'énergie convertie sur un cycle de conversion suivant.

En outre, le procédé selon l'invention peut comporter l'étape supplémentaire de transférer l'énergie électrique produite par un condensateur vers un deuxième condensateur et inversement jusqu'à atteindre un niveau d'amplification prédéterminé de l'énergie électrique,

Une quantité d'énergie en excès par rapport audit niveau d'amplification est alors transférée à une unité de stockage ou d'utilisation.

De manière très avantageuse, le transfert de charges de l'étape c) est commandé par une diode ou un interrupteur muni d'un circuit de commande.

La présente invention a également pour objet un dispositif de conversion d'énergie mécanique en énergie électrique tel que défini par la revendication 11.

Les moyens de commande de transfert de charges sont avantageusement formés par au moins une diode ou au moins un interrupteur muni d'un circuit de commande.

L'élément piézoélectrique et les armatures du condensateur sont avantageusement sensiblement parallèles de manière à être soumis à la même contrainte mécanique.

Le dispositif selon l'invention peut comporter deux condensateurs dont les capacités varient en sens inverse.

Dans un exemple de réalisation, le dispositif selon l'invention comporte une partie mobile par application d'une contrainte mécanique munie de doigts de part et d'autre de son axe de déplacement, deux parties fixes munies également de doigts venant en regard des doigts de la partie mobile, les éléments piézoélectriques étant perpendiculaires au déplacement de la partie mobile et reliés électriquement à la partie mobile, les paires de doigts en regard formant deux ensembles de condensateurs en série dont les capacités varient en sens inverse.

Dans un autre exemple de réalisation du dispositif selon l'invention, l'élément piézoélectrique est sous forme d'une membrane souple suspendue à distance d'une électrode électrostatique, de manière à ce que l'électrode électrostatique et une deuxième électrode de l'élément piézoélectrique forment un condensateur à capacité variable par déformation de la membrane.

Le dispositif selon l'invention peut également comporter une structure stratifiée dans laquelle le condensateur est formé par une alternance de premières électrodes à un premier potentiel, de couches en matériau électriquement isolant et de

deuxièmes électrodes à un deuxième potentiel, le matériau électriquement isolant étant élastiquement déformable et dans lequel l'élément piézoélectrique forme une couche de la structure stratifiée.

L'élément piézoélectrique comporte avantageusement une couche en matériau piézoélectrique et une première et une deuxième électrode de part et d'autre de la couche en matériau piézoélectrique.

Le matériau piézoélectrique peut être choisi parmi les céramiques : PZT ($PbZrTiO_3$) ou PLZT (PZT avec lanthane) ou $BaTiO_3$, parmi les nanocristaux (PZN-PT ou PMN-PT), parmi les polymères (PVDF) ou les AFC (Active Fiber Composite).

## BRÈVE DESCRIPTION DES DESSINS

La présente invention sera mieux comprise à l'aide de la description qui va suivre et des dessins annexés, sur lesquels :

- la figure 1A est une vue de dessus d'une représentation schématique d'un exemple de réalisation d'un dispositif selon l'invention,
- la figure 1B est un exemple de schéma électrique correspondant au dispositif de la figure 1A,
- la figures 1C représente les variations de capacités en picofarad des condensateurs du dispositif des figures 1A et 1B en fonction du temps en milliseconde lorsque l'élément piézoélectrique est déformé, ainsi que la déformation en micromètre de l'élément piézoélectrique,
- la figures 1D représente les variations du potentiel aux bornes des condensateurs du dispositif des figues 1A et 1B en fonction du temps lorsque l'élément piézoélectrique est déformé,
- la figure 1E est une modélisation du fonctionnement électrique d'un élément piézoélectrique,
- la figure 2A est une représentation schématique en perspective d'un autre exemple de réalisation d'un dispositif de récupération d'énergie selon la présente invention,
- la figure 2B est un schéma électrique de principe dé base d'un dispositif selon l'invention,
- la figure 3 est une représentation schématique en perspective d'un autre exemple de réalisation de la présente invention,
- la figure 4 est une représentation schématique d'un autre exemple de réalisation de la présente invention,

- la figure 5A est une représentation schématique d'un autre exemple de réalisation de la présente invention,
- les figures 5B et 5C sont des vues de détail du dispositif de la figure 5A,
- la figure 5D est un exemple de schéma électrique correspondant au dispositif de la figure 5A,
- la figure 6 est un exemple d'un schéma électrique correspondant à un autre exemple dé réalisation de la présente invention,
- la figure 7 est un exemple d'un schéma électrique correspondant à un autre exemple de réalisation de la présente invention,
- la figure 8 est un exemple d'un schéma électrique correspondant à un autre exemple de réalisation de la présente invention,
- la figure 9 est un exemple d'un schéma électrique correspondant à un autre exemple de réalisation de la présente invention.

## EXPOSÉ DÉTAILLÉ DE MODES DE RÉALISATION PARTICULIERS

Dans toute la description, on entend par « déformable », un élément apte à se déformer élastiquement sous une charge donnée, le matériau de l'élément étant choisi en fonction des contraintes susceptibles d'être subies par le dispositif de récupération.

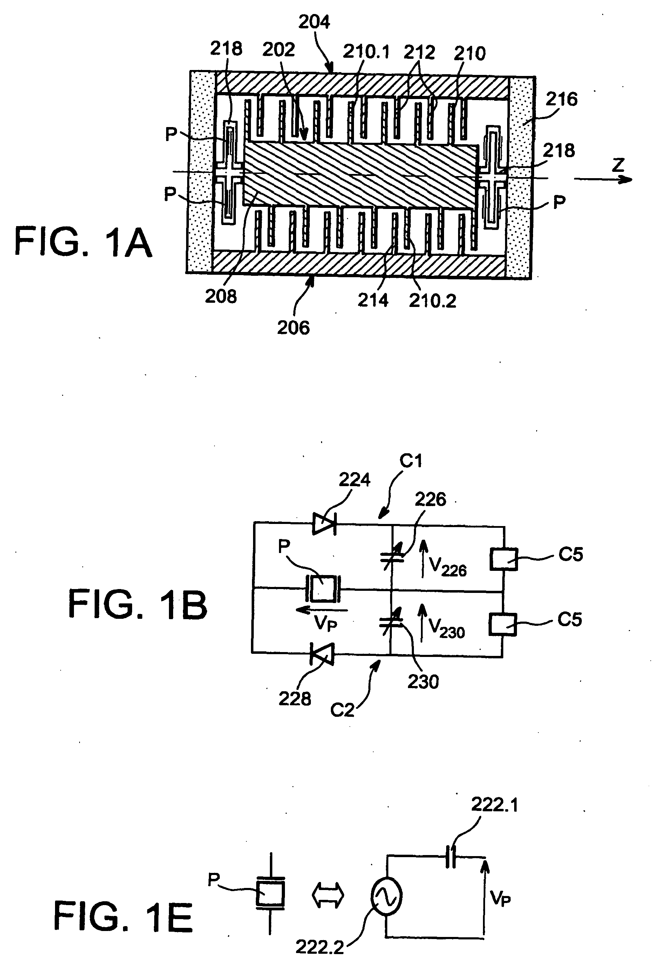

Sur les figures 1A et 1B, on peut voir un exemple de réalisation de l'invention comportant une partie mobile 202 et deux parties fixes 204, 206 entourant la partie mobile 202, les parties mobile et fixes étant interdigitées.

Les parties fixes et la partie mobile sont réalisées en matériau conducteur.

La partie mobile 202 comporte un corps 208 d'axe Z muni d'une pluralité de doigts 210 s'étendant de part et d'autre de l'axe Z et perpendiculaires à celui-ci. Les parties fixes 204, 206 sont parallèles à l'axe Z et comportent des doigts 212, 214 perpendiculaires à l'axe Z. Les doigts 212 de la partie fixe 204 sont en regard des faces 210.1 situées à la droite des doigts 210 sur le dessin et les doigts 214 sont en regard des faces 210.2 situées à la gauche des doigts 210 sur le dessin.

La partie mobile 202 peut se déplacer le long de l'axe Z vers la droite et vers la gauche. Ainsi lorsque la partie mobile 202 se déplace vers la droite, les doigts 210 s'éloignent des doigts 212 et se rapprochent des faces 214. Lorsque la partie mobile 202 se déplace vers la gauche, les doigts 210 se rapprochent des doigts 212 et s'éloignent des doigts 214.

La partie mobile 202 est reliée à un support 216 par des bras déformables 218, de manière à autoriser les déplacements selon l'axe Z. Quant aux parties fixes 204, 206, celles-ci sont reliées rigidement au support 216.

Des éléments piézoélectriques P sont disposés sur les bras 218 de manière à être également déformés lorsque la partie mobile 202 se déplace ; ils sont électriquement en série ou en parallèle. Les éléments piézoélectriques P comportent un matériau piézoélectrique et deux électrodes de part et d'autre du matériau piézoélectrique.

L'ensemble des doigts 212 de la partie fixe 204 et des doigts 210 de la partie mobile 202 forment une première série de condensateurs, dont la capacité augmente lorsque la partie mobile 202 se déplace vers la droite.

L'ensemble des doigts 214 de la partie fixe 206 et 210 de la partie mobile 202, en regard forme une deuxième série de condensateurs dont la capacité augmente lorsque la partie mobile 202 se déplace vers la gauche.

Nous considérerons pour la suite de l'exposé que, lorsque la partie mobile 202 se déplace vers la droite, la tension $V_p$ aux bornes de l'élément piézoélectrique augmente et lorsque la partie mobile se déplace vers la gauche, la tension $V_p$ aux bornes de l'élément piézoélectrique diminue.

Sur la figure 1B, on peut voir un exemple de circuit électrique pouvant être associé au dispositif de la figure 1A. Le circuit électrique est composé de deux sous-circuits C1, C2. Le premier sous-circuit C1 comporte l'élément piézoélectrique P, montée en série avec une première diode 224 et un premier condensateur 226 à capacité variable $C_{226}$. Le condensateur 226 représente le condensateur équivalent à la succession de condensateurs formés par les doigts 210 et 212. Le deuxième sous-circuit C2 comporte le même élément piézoélectriques 22 également monté en série avec une deuxième diode 228 et un deuxième condensateur 230 à capacité $C_{230}$ variable. Le deuxième condensateur représente le condensateur équivalent aux condensateurs formés par les doigts 210 et 214. Les première 224 et deuxième 228 diodes sont montées de manière opposée pour permettre chacune le passage d'un courant de sens opposé.

Ainsi lorsque la tension $V_p$ aux bornes de l'élément piézoélectrique P augmente, la diode 224 devient passante, et lorsque tension $V_p$ aux bornes de l'élément piézoélectrique P diminue, c'est au tour de la diode 228 de devenir passante.

Dans l'exemple représenté, les circuits C1 et C2 sont reliés chacun à une unité de stockage C5 ou à une application distincte, mais on peut prévoir de les relier à la même unité ou à la même application.

Nous allons maintenant décrire le fonctionnement de ce dispositif.

Lorsque le support 216 est soumis à des vibrations mécaniques, la partie mobile se déplace selon l'axe Z de gauche à droite. Le déplacement de la partie mobile provoque la déformation de l'élément piézoélectrique P. Il y a alors apparition d'une tension aux bornes de celui-ci, les charges produites sont alors transmises à l'un ou l'autre des condensateurs à capacité variable, qui amplifie l'énergie électrique récupérée du fait de la variation de la capacité et de la variation du potentiel à ses bornes.

Ainsi dans chaque direction de déplacement, un élément piézoélectrique P est déformé, provoquant la conversion de l'énergie mécanique en énergie électrique.

Dans l'exemple représenté, les moyens de commande de transfert de charge sont formés par des diodes 224, 228, mais on pourrait prévoir, par exemple des interrupteurs munis d'un circuit de commande.

Dans le cas d'une diode, ce transfert s'effectue de manière continue à partir d'une valeur de charge minimale. Tandis que dans le cas d'un interrupteur de commande, ce transfert s'effectue d'un seul coup environ au moment où le potentiel entre les électrodes de l'élément piézoélectrique est maximum. L'interrupteur nécessite d'être commandé à l'inverse des diodes qui deviennent passantes automatiquement.

Sur la figure 1E, on peut voir un schéma électrique modélisant de manière simplifiée le fonctionnement électrique d'un élément piézoélectrique.

Ce circuit comporte un condensateur 222.1 de capacité $C_p$ et un générateur de tension alternative 222.2 formé par le matériau piézoélectrique déformé.

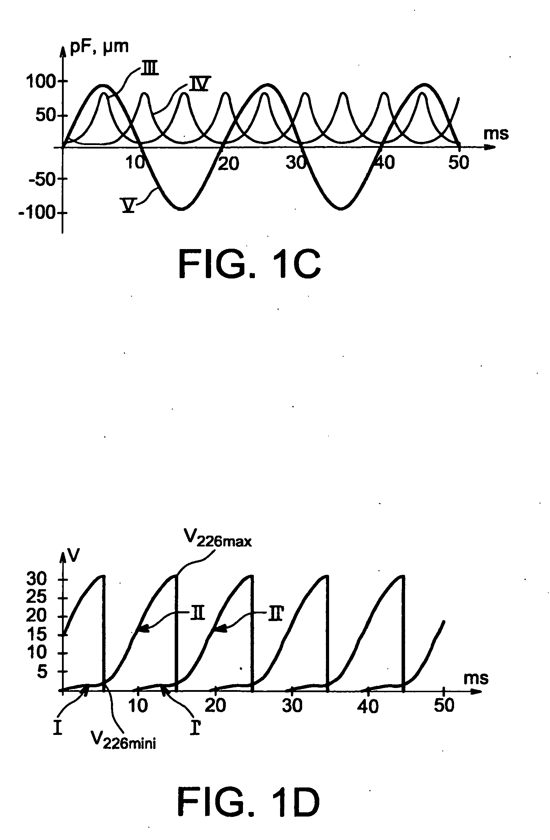

Sur la figure 1C, on peut voir les variations des capacités aux bornes des condensateurs 226 (Courbe III), 230 (courbe IV), et la déformation de l'élément piézoélectrique (courbe V) en fonction du temps.

Sur la figure 1D, on peut voir la variation du potentiel aux bornes de condensateurs 226 (courbe I, II) et 230 (courbe I', II').

Lorsque la partie mobile 202 se déplace vers la droite, l'élément piézoélectrique P est déformée et la tension Vp aux bornes de l'élément piézoélectrique P augmente et rend la diode 304 conductrice (partie I, figure 1D). La tension $V_{226}$ aux bornes du condensateur 226 suit donc la tension Vp par un transfert progressif des charges électriques stockées dans le condensateur P.1 de l'élément piézoélectrique de la figure 1B vers le condensateur 226. Ensuite, lorsque la déformation de l'élément piézoélectrique atteint une valeur maximale, la tension Vp aux bornes de cet élément commence à diminuer alors que la tension $V_{226}$ au contraire augmente (partie II de la figure 1D), ce qui engendre le blocage de la diode 224. Cette augmentation de $V_{226}$ est liée au fait que lorsque la partie mobile 202 se déplace vers la gauche, la capacité $C_{226}$ diminue (partie II', figure 1D), le condensateur 226 étant alors isolé électriquement du reste, de par le blocage de la diode 224, sa charge $Q_{226}=C_{226}V_{226}$ reste constante. Si cette charge $Q_{226}$ est constante et la capacité $C_{226}$ diminue, alors la tension $V_{226}$ augmente. Lorsque la tension $V_{226}$ atteint une valeur maximale, un circuit de décharge traditionnel (structure de type Flyback ou autre) peut être utilisé pour transférer l'énergie de cette charge vers l'unité de stockage C5 ou directement vers l'application à alimenter.

L'énergie électrique $E_{226}$ acquise durant cette phase de décroissance de la capacité $C_{226}$ vaut $1/2Q_{226}$ $(V_{226max}-V_{226min})$ ou encore $1/2Q_{226}$ $(1/C_{226min}-1/C_{226max})$. La charge $Q_{226}$ est la charge transférée par l'élément piézoélectrique P au condensateur 226 jusqu'au moment où la tension aux bornes de l'élément piézoélectrique commencé à décroître (début de la partie II, figure 1D) ; la tension $V_{226max}$ est la tension aux bornes du condensateur 226 à la fin de la partie II (figure 1D) ; la tension $V_{226min}$ est la tension aux bornes du condensateur 226 au début de la partie II (figure 1D) ; la capacité $C_{226min}$ est la capacité du condensateur 226 à la fin de la partie II (figure 1D) ; la capacité $C_{226max}$ est la capacité du condensateur 226 au début de la partie II (figure 1D).

Pour détecter les extrema de tension au niveau de l'élément piézoélectrique P ou de la structure électrostatique, il suffit par exemple de détecter le passage de la dérivée de cette tension d'une valeur positive à une valeur négative.

En outre, le dispositif offre avantageusement une symétrie, ainsi un fonctionnement similaire intervient dans le circuit C2 lorsque la tension Vp devient négative, c'est-à-dire lorsque la partie mobile 202 se déplace vers la gauche. Cette symétrie de construction permet ainsi de récupérer de l'énergie dans les deux sens de déplacement. On peut cependant prévoir un seul circuit.

De manière avantageuse, il est prévu que la tension Vp aux bornes de l'élément piézoélectrique soit maximale lorsque la capacité du condensateur 226, 230 est maximale. La conversion est alors optimisée, puisque les valeurs des tensions $V_{226}$ pour le calcul de l'énergie électrique convertie sont les valeurs extrêmes aux bornes du condensateur 226.

En effet, si la tension Vp de l'élément piézoélectrique P devenait maximale avant ou après la capacité $C_{226}$ du condensateur 226, les valeurs des tensions $V_{226}$ aux bornes du condensateurs 226 ne seraient pas les valeurs extrêmes, mais des valeurs se trouvant sur la partie II (Figure 1D) dans l'intervalle $] V_{226min}; V_{226}max [$.

De plus de manière avantageuse, la conversion opérée par l'élément piézoélectrique et la conversion opérée par les condensateurs 226, 230 sont synchronisées, puisque la déformation de l'élément piézoélectrique P et des condensateurs 226, 230 résultent des mêmes efforts mécaniques externes, ceux-ci provoquant l'apparition d'une différence de potentiel aux bornes de l'élément piézoélectrique, et la variation de capacité des condensateurs 226, 230.

Le dispositif selon la présente invention présente par ailleurs l'avantage par rapport à un système électrostatique de l'état de la technique, de pouvoir démarrer sans nécessité de disposer d'une source énergie électrique initiale, puisque celle-ci est fournie par l'élément piézoélectrique lorsqu'il est déformé par la partie mobile 202.

Par ailleurs, le cycle de charge actif de l'état de la technique est source de pertes électriques dues à la consommation du circuit électrique qui permet de puiser l'énergie dans une unité de stockage déjà chargée, de détecter l'instant de charge de la capacité et d'injecter cette énergie dans le dispositif. Selon l'invention, le cycle de charge actif est avantageusement remplacé par un cycle de charge totalement passif et naturellement synchronisé. Puisque la conversion d'énergie s'effectue majoritairement au travers de la structure électrostatique, l'élément piézoélectrique, qui a pour fonction principale d'injecter une petite charge initiale dans la structure électrostatique, n'a pas besoin d'être très performant.

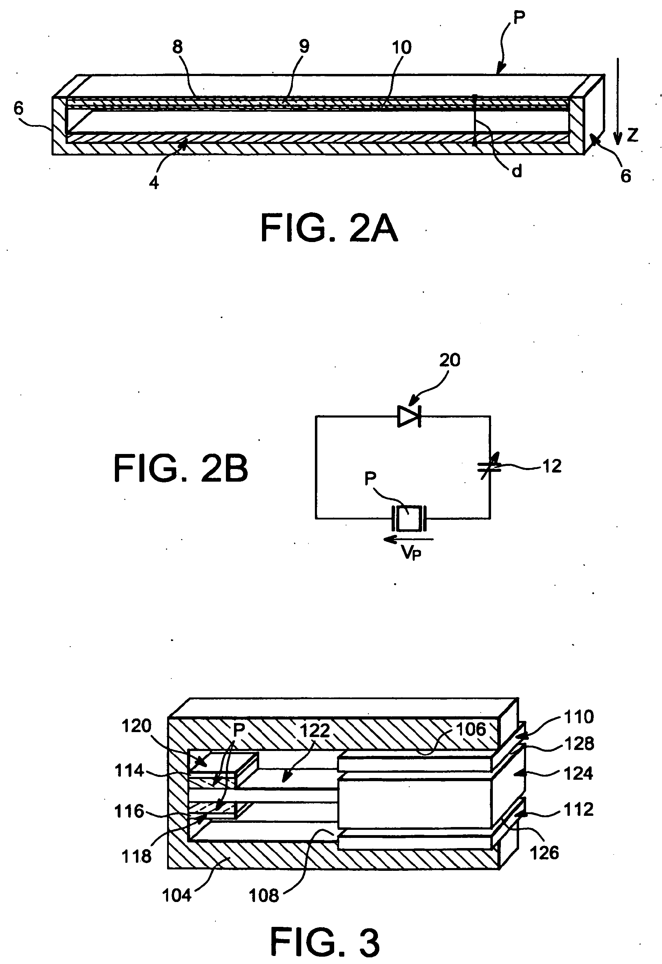

Sur la figure 2A, on peut voir un autre exemple de réalisation d'un dispositif selon la présente invention, comportant un élément piézoélectrique P et une électrode 4 électrostatique. L'élément piézoélectrique P et l'électrode 4 sont sensiblement parallèles et séparés par un matériau diélectrique, par exemple de l'air. L'élément piézoélectrique P et l'électrode fixe 4 sont fixés par leurs extrémités longitudinales à un support 6. L'élément piézoélectrique P et l'électrode fixe 4 sont isolés électriquement.

L'élément piézoélectrique P comporte un matériau piézoélectrique 9, par exemple une membrane en polymère piézoélectrique type PVDF, une première 8 et une deuxième 10 électrode de part et d'autre de la membrane. La deuxième électrode 10 est en vis-à-vis de l'électrode fixe 4 de manière à former un condensateur 12.

L'élément piézoélectrique P est apte à se déformer sous l'application d'une charge mécanique selon la direction Z, cette déformation provoquant un déplacement de la deuxième électrode 10 et donc une variation de la distance d entre l'électrode fixe 4 et l'électrode mobile 10. Le condensateur 12 est donc à capacité variable par application d'un effort mécanique sur la membrane 9.

Sur la figure 2B, on peut voir un schéma électrique de principe de base d'un dispositif selon l'invention, par exemple le dispositif de la figure 1A. Des moyens de commande du transfert de charge 20 sont disposés dans le circuit. Ces moyens sont, par exemple du type diode ou interrupteur muni d'un circuit de commande. Ces moyens 20 autorisent le transfert de charge de l'élément piézoélectrique P vers le condensateur 12.

Lorsqu'un effort est exercé sur l'élément piézoélectrique P selon Z, la membrane piézoélectrique 9 se déforme, provoquant l'apparition d'un potentiel électrique entre les première 8 et deuxième 10 électrodes. Cette déformation de l'élément piézoélectrique P engendre le rapprochement de la deuxième électrode 10 et de l'électrode fixe 4, et une augmentation de capacité du condensateur 12.

Le fonctionnement est identique à celui décrit en relation avec les figures 1A à 1E.

La charge générée par la déformation de l'élément piézoélectrique P est transférée au condensateur 10. Puis, lorsque l'effort cesse de s'exercer sur l'élément piézoélectrique P, le condensateur reprend sa position repos, les électrodes 4 et 10 s'écartent provoquant une diminution de la capacité.

Cette variation de capacité associée à une variation du potentiel aux bornes du condensateur 12, permet de récupérer une énergie électrique qui peut être stockée ou directement utilisée par une application déterminée.

La déformation de l'élément piézoélectrique P est synchronisée avec la variation de capacité d'un élément électrostatique, puisque c'est la même énergie mécanique extérieure qui provoque la variation de capacité et la déformation de l'élément piézoélectrique.

Ce dispositif peut, par exemple servir à récupérer l'énergie de pression ou de chocs pouvant s'exercer sur une membrane, telle que celle résultant de l'appui tactile sur un interrupteur..., la variation de pression d'un gaz, la variation de pression d'un vaisseau sanguin, ou encore la chute d'une goutte de pluie sur l'élément piézoélectrique.

Sur la figure 3, on peut voir un autre exemple de réalisation d'un dispositif selon la présente invention comportant un support 104 en forme de U allongé, dont des extrémités intérieures 106, 108 des branches portent des électrodes électrostatiques 110, 112 en vis-à-vis. Le dispositif comporte également un élément piézoélectrique P fixé sur le fond du U. L'élément piézoélectrique P comporte deux parties 114, 116 en matériau piézoélectrique comportant respectivement sur leur face externe une électrode 118, 120 et fixées par leur face interne à une première extrémités d'une poutre 122 en matériau conducteur s'étendant parallèlement aux branches du U. La poutre comporte à sa deuxième extrémité une masse mobile 124 disposée entre les électrodes électrostatiques 110, 112. La masse 124 comporte des faces conductrices 126, 128 en regard respectivement des électrodes 110, 112, et séparées de celles-ci par un matériau diélectrique, par exemple de l'air.

Les faces 126, 128 et les électrodes 110, 112 forment respectivement des condensateurs, dont la capacité peut varier lorsque la masse 124 se déplace entre les branches du U.

Ainsi, le dispositif peut servir, grâce à l'inertie de la masse mobile 124, à récupérer de l'énergie électrique si le support 104 est soumis à des vibrations mécaniques. Lorsque le support 104 est soumis à des vibrations mécaniques, la masse 124 oscille entre les branches du U, provoquant une déformation des parties piézoélectriques 114, 116 et donc l'apparition d'un potentiel électrique entre les électrodes 118,120 et l'électrode commune 122 et simultanément une variation de la capacité des condensateurs.

La poutre étant conductrice, le potentiel de l'électrode 122 se retrouve sur les électrodes 1126, 128.

Il est alors possible de récupérer une énergie électrique en associant un circuit électrique, par exemple comme celui de la figure 1B.

Le fonctionnement est identique à celui du dispositif de la figure 1A.

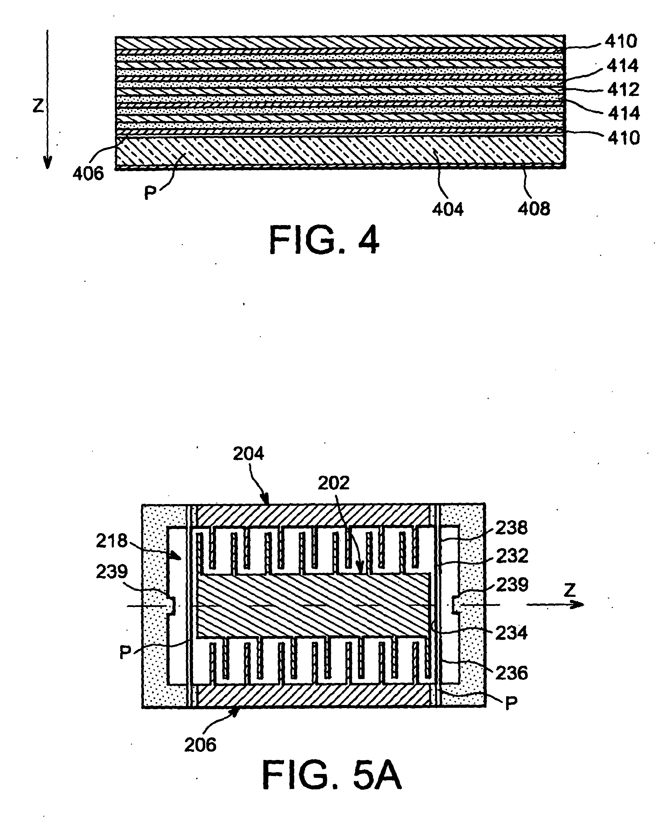

Sur la figure 4, on peut voir un autre exemple de réalisation d'un dispositif de conversion de contrainte mécanique en énergie électrique, ayant une structure en sandwich formée par une pluralité de couches.

Le dispositif comporte un élément piézoélectrique P muni, de part et d'autre d'un matériau piézoélectrique 404, d'électrodes 406,408. Le dispositif comporte également une structure multicouches comportant des premières couches conductrices 410 à un même potentiel $U_{410}$ alternées avec des deuxièmes couches conductrices 412 à un même potentiel $U_{412}$, séparées par des couches isolantes 414 déformables. Cette structure est déposée sur l'élément piézoé-lectrique.

Le potentiel $U_{410}$ est différent du potentiel $U_{412}$.

Les premières 410 et deuxièmes 412 couches conductrices forment avec les couches isolantes 414, une succession de condensateurs à capacité variable, électriquement en parallèle.

L'électrode 406 est en contact électrique avec l'électrode 410.

Un côté opposé à celui de l'élément piézoélectrique est destiné à recevoir une contrainte mécanique variable selon la direction Z.

Lorsqu'une contrainte s'applique au sandwich, il y a augmentation de l'énergie potentielle électrique aux bornes de l'élément piézoélectrique P et une augmentation de la capacité électrostatique de par le rapprochement des couches 410, 412. Le rapprochement de ces couches 410, 412 est rendu possible par le choix d'un isolant électrique très souple, par exemple en caoutchouc, qui sous la contrainte va permettre aux couches 410, 412 de se rapprocher.

Comme pour le dispositif de la figure 1A, l'énergie électrique produite par l'élément piézoélectrique P est transférée vers le condensateur 416 lorsqu'elle est maximale. L'énergie potentielle électrique est alors amplifiée durant le relâchement de la contrainte appliquée sur le dispositif.

Lors de la compression, l'élément piézoélectrique convertit une partie de l'énergie mécanique en énergie électrique et au relâchement de la contrainte, c'est le condensateur ou la partie électrostatique qui amplifie cette conversion.

On peut également parler de structure électrostatique. En effet, lorsque les couches conductrices 410, 412 sont rapprochées l'une de l'autre, elles reçoivent une charge électrique provenant de l'élément piézoélectrique P. Cette charge électrique crée alors des forces électrostatiques tendant à empêcher les couches conductrices de s'éloigner, transformant ainsi une partie de l'énergie potentielle mécanique acquise lors de la compression en énergie potentielle électrique. Cette énergie potentielle électrique acquise peut alors être utilisée pour alimenter un circuit électronique, un actionneur ou une unité de stockage d'énergie.

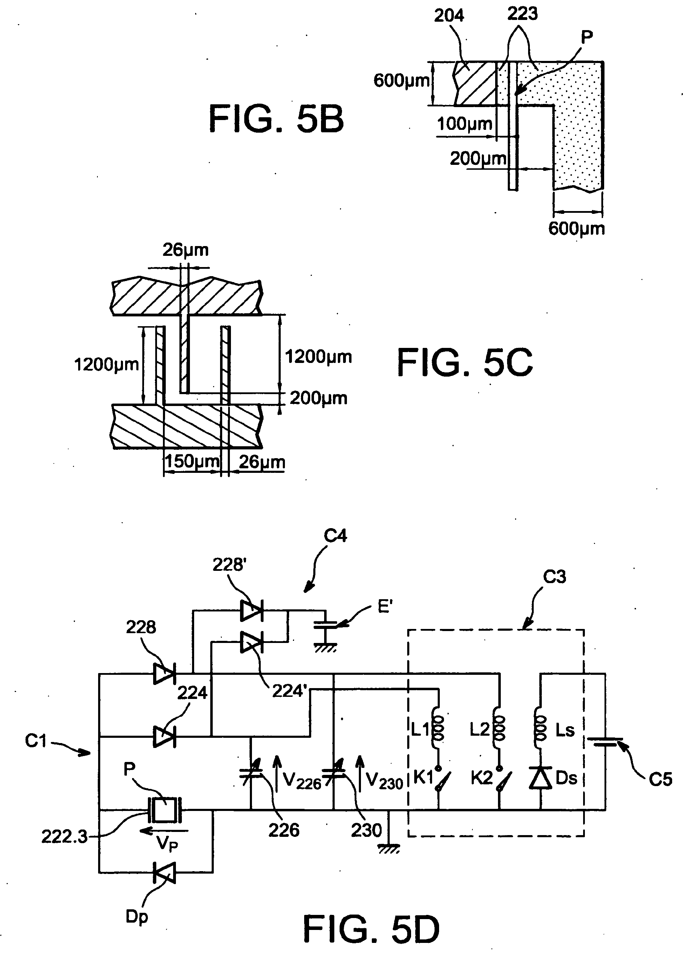

Sur les figures 5A, 5B et 5C, on peut voir une représentation d'un exemple de réalisation pratique d'un dispositif selon la présente invention de forme similaire à celle du dispositif de la figure 1A.

Pour des raisons de simplification, nous reprendrons les mêmes références que celles utilisées sur la figure 1A.

Les bras 218 sont formés par les éléments piézoélectriques P s'étendant perpendiculairement à l'axe de déplacement Z sur toute la largeur du support. Les éléments piézoélectriques P sont par exemple encastrés par leurs extrémités entre le support et les parties fixes 204, 206, comme on peut le voir sur le détail de la figure 5B. Une couche 223 de matériau isolant électrique est interposée entre les éléments piézoélectriques P et les parties fixes 204, 206. Les éléments piézoélectriques comportent une électrode 234 disposée d'un côté d'un matériau piézoélectrique 232, cette électrode est reliée électriquement à la partie mobile 202, deux électrodes 236, 238. disposées de l'autre côté du matériau piézoélectrique 232.

Les électrodes 236, 238 sont connectées ensemble à un même potentiel électrique.

Le dispositif comporte avantageusement des butées 239 pour éviter un court-circuit par un contact entre les doigts en fin de course.

Il est à noter que le dispositif de conversion d'énergie peut comporter un nombre de doigts plus grand que celui représenté.

Les dimensions indiquées sur les figures 5A à 5C sont données uniquement à titre d'exemple et ne sont aucunement limitatives.

La partie mobile 202 a une largeur de 300 $\mu$m et une longueur de 7000 $\mu$m. Les doigts sont espacés de 150 $\mu$m et ont une hauteur de 1200 $\mu$m. Le dispositif peut avoir une épaisseur de 400 $\mu$m, comporter 46 doigts de chaque côté de la partie mobile 202 et peser environ 1 g. L'entrefer entre les doigts peut varier entre 1 $\mu$m et 50 $\mu$m.

Lorsque la partie mobile 202 se déplace vers la droite du dessin selon Z par rapport aux parties fixes 204, 206, il y a augmentation de la capacité entre la partie mobile 202 et la partie fixe 204, et diminution de la capacité entre la partie mobile 202 et la partie fixe 206. Il y a également en même temps, déformation, notamment étirement, des éléments piézoélectriques P.

Nous considérons que les électrodes 234 des éléments piézo-électriques sont au même potentiel électrique que la partie mobile 202.

Lorsque les éléments piézoélectriques P s'étirent, nous considérons que par symétrie les potentiels des électrodes 236, 238 augmentent de la même manière et peuvent être connectés ensemble à un potentiel électrique V.

Le système peut être réalisé partiellement ou totalement par les technologies de la microélectronique ou à plus grande échelle avec les techniques classiques de fabrication (usinage, moulage ou autres).

Sur la figure 5D, on peut voir un circuit électrique adapté à la structure mécanique du circuit de la figure 5A.

Celui-ci comporte en plus du circuit représenté en figure 1B, un exemple d'un circuit de décharge C3 de l'énergie électrique récupérée par conversion de l'énergie mécanique vers une unité de stockage C5 d'énergie électrique, et avantageusement un circuit de source électrique secondaire C4 pour l'actionnement du circuit de décharge C3 au démarrage.

Le circuit de décharge C3 est relié en parallèle aux circuits C1 et C2. Le circuit de décharge comporte un interrupteur K1, K2 en série avec une bobine L1, L2, respectivement en parallèle avec le circuit C1, C2. Il comporte également, reliée à l'interrupteur K1, K2 une diode $D_S$ et une bobine $L_S$ en série avec l'unité de stockage C5. Les bornes L1, L2 et $L_S$ ont de plus le même circuit magnétique.

Une diode $D_P$ est également montée en parallèle avec l'élément piézoélectrique P.

Le circuit de source secondaire C4 comporte, par exemple deux diodes 224' et 228' reliées d'une part aux diodes 224 et 228 et d'autre part à une source E' rechargeable par les diodes 224' et 228'.

A chaque fois que la capacité $C_{226}$ ou $C_{230}$ atteint une valeur maximale $C_{226max}$ ou $C_{230max}$, l'élément piézoélectrique P atteint aussi une déformation maximale et produit une tension Vp positive susceptible de précharger le condensateur 226, 230 dont la capacité a atteint une valeur maximale.

L'énergie de la charge injectée est alors amplifiée par la décroissance de la valeur de la capacité du condensateur 226, 230 préchargé ou de la croissance de la tension, aux bornes du condensateur 226, 230, de la même manière que pour le dispositif de la figure 1A.

Quand la tension aux bornes du condensateur 226, 230 atteint une valeur maximale, son énergie électrique est alors transférée vers l'unité de stockage C5 à l'aide du circuit de décharge C3, en fermant, sur un quart de période de résonance ($L1C_{226}$ ou $L2C_{230}$), l'interrupteur K1, K2 correspondant. L'énergie potentielle électrique acquise par le condensateur 226, 230 est alors transférée vers le circuit de décharge C3 à travers l'interrupteur K1 ou K2, puis du circuit de décharge C3 vers l'unité de stockage C5 à travers la diode $D_s$.

Si au démarrage l'unité de stockage C5 est vide, l'énergie nécessaire à la commande des interrupteurs K1 et K2 peut être fournie par la source secondaire E' qui se charge naturellement avec les diodes 224' et 228'. Ensuite, dès que l'unité de stockage C5 a atteint une tension suffisante, elle peut alimenter la commande de ces interrupteurs.

La diode Dp a pour rôle de réinjecter sur l'électrode 222.3 de l'élément piézoélectrique P, les charges transférées précédemment sur le condensateur 226 ou 230.

Pour minimiser les pertes, les diodes sont choisies de préférence avec un faible seuil, une faible résistance à l'état passant et une haute impédance en tension inverse, ce sont par exemple des diodes de type Schottky. Les transistors sont de préférence choisis avec une faible résistance à l'état passant, une très grande impédance à l'état ouvert et une faible capacité parasite, par exemple ce sont des transistors de type MOSFET ou JFET.

Concernant l'élément piézoélectrique, le matériau utilisé, son épaisseur et sa longueur sont choisis de telle manière qu'ils soient capables de fournir suffisamment de tension et de courant pour effectuer la précharge de la structure électrostatique comportant les circuits C1 et C2, et qu'ils conduisent de préférence à une résonance de la structure électrostatique dans la plage fréquentielle des vibrations mécaniques ou mouvements relatifs que l'on cherche à récupérer.

Le matériau piézoélectrique peut être choisi parmi les céramiques : PZT ($PbZrTiO_3$) ou PLZT (PZT avec lanthane) ou $BaTiO_3$, parmi les nanocristaux (PZN-PT ou PMN-PT), parmi les polymères (PVDF) ou les AFC (Active Fiber Composite).

Le circuit magnétique du transformateur inductif est choisi de telle manière qu'il puisse stocker l'énergie acquise par le condensateur 226 ou 230 sur un cycle. Le nombre de spires de la bobine L1, L2 et Ls placé sur ce circuit magnétique est tel que les temps de charge/décharge du circuit magnétique soient négligeables par rapport à la période mécanique du déplacement relatif. Ce nombre de spires dépend entre autre de la valeur de $C_{226min}$, $C_{230min}$ et de la tension aux bornes de l'unité de stockage C5.

On peut prévoir, par exemple, que la période de résonance des circuits $L1C_{226min}$ et $L2C_{230min}$ soit de l'ordre de la microseconde, c'est à dire très faible par rapport à celle des vibrations mécaniques de quelques millisecondes de période.

Nous allons, sur la base des dimensions du dispositif données ci-dessus, déterminer l'énergie récupérable par le dispositif selon l'invention.

La surface capacitive du condensateur 226 ou 230 est égale à :

$$S = 46*0,4*1 = 18,4 \ mm^2$$

$$C_{226min} = C_{230min} = e_0 S/d_{max} = e_0 * 18,4 \ mm^2/50 \ \mu m = 3,3 \ pF.$$

$$C_{226max} = C_{230max} = e_0 S / d_{min} = e_0 * 18,4 \ mm^2 / 1 \ \mu m = 162,7 \ pF$$

$d_{max}$ et $d_{min}$ sont respectivement les distances d'entrefer maximale et minimale entre deux doigts des condensateurs $C_{226}$ et $C_{230}$ lors du déplacement.

Si la fréquence de résonance est prise égale à $f_r = 50 Hz$, alors la raideur globale k des éléments piézoélectriques par rapport à un déplacement selon Z dé la partie mobile 202 est égale à :

$$k = M(2?f_r)^P = 10^{-3}(2?50)^P = 98,7 \ N/m.$$

L'énergie mécaniquement disponible sur un cycle avec A l'amplitude du déplacement relatif est égale à $E_{dispo} \tilde{} 1/2kA^2$.

Dans le cas le plus favorable (celui qui génère le plus d'énergie), A vaut $(d_{max}-d_{min})/P = 24,5 \ \mu m$.

Ainsi $E_{dispo} \tilde{} 1/2kA^2 = 1/2*98,7*(24,85*10^{-6})^2 = 29,6 \ nJ$.

L'énergie convertible électriquement en un cycle par la structure électrostatique vaut :

$$E_C = \frac{1}{2}\frac{C_{max}}{C_{min}}(C_{max} - C_{min})V^2_{charge} = 4.10^{-9}V^2_{charge}$$

Si l'on souhaite que l'énergie convertible électriquement soit égale à l'énergie disponible mécaniquement, ce qui correspond à un amortissement proche de 1 : $E = E_{dispo}$, ainsi $V^2_{charge} = 2.7 \ V$.

L'énergie à injecter dans la structure électrostatique ($C_{226}$ ou $C_{230}$) pour effectuer la précharge vaut :

$$E_{précharge} = \frac{1}{2}C_{max}V^2_{charge} = 0,6nJ \ .$$

Il suffit alors que les éléments piézoélectriques soient capables, pour un déplacement relatif d'amplitude 24.5 $\mu m$ de produire, à chaque cycle, une énergie de 0.6 nJ sous 2.7 V, ce qui correspond à une énergie 49 fois inférieure à celle qui sera convertie par la structure électrostatique. Il apparaît donc que les poutres piézoélectriques n'ont en fait ici pour rôle électrique que d'amorcer le fonctionnement de la structure de conversion électrostatique.

Puisque l'énergie électrique convertie par les éléments piézoélectriques ne représente que 2% de l'énergie mécanique disponible, le choix des matériaux piézoélectriques pourra ainsi se faire en tenant principalement compte de leur compatibilité avec les technologies de fabrication utilisées en microélectronique.

La puissance récupérable avec un tel système à 50 Hz et à pleine amplitude est :

$$P_{récupérable50Hz} = 29,6.10^{-9}*2*50 = 2,96 \ \mu W,$$

puisque nous avons deux cycles par période mécanique, un cycle avec le condensateur $C_{226}$ et un cycle avec le condensateur $C_{230}$.

La présente invention permet de gagner 20% de rendement par rapport à un système uniquement électrostatique.

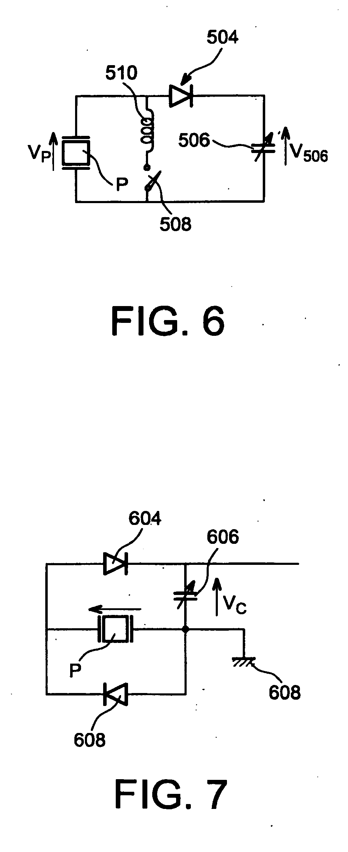

Sur la figure 6, on peut voir un schéma d'un circuit électrique utilisable pour exploiter l'association d'éléments piézoélectriques et électrostatique synchronisés selon un mode avantageux de la présente invention.

Le circuit comporte un élément piézoélectrique P, une diode 504, un condensateur 506 à capacité variable $C_{506}$, et un interrupteur 508 et une bobine 510 en parallèle avec l'élément piézoélectrique P. La tension aux bornes de l'élément piézoélectrique P est $V_P$ et la tension aux bornes de condensateur 506 est $V_{506}$.

Nous considérons ici que la capacité du condensateur 506 augmente lorsque Vp diminue inversement.

On prévoit, dans cet exemple de réalisation, d'actionner l'interrupteur 508 pour inverser la tension aux bornes de l'élément piézoélectrique et pour améliorer le rendement du dispositif.

Lorsque la tension Vp est maximale, la tension aux bornes de l'élément piézoélectrique P peut être inversée en fermant l'interrupteur 508 sur une demi-période de résonance du circuit formé par la bobine 510 et la capacité de l'élément piézoélectrique P. Cette inversion du signe des charges stockées dans l'élément piézoélectrique P entraîne l'apparition d'une force de freinage mécanique qui permet d'augmenter l'énergie convertie sur le cycle suivant. Ce cycle correspond à la phase pendant laquelle la tension $V_p$ diminue. Ensuite lorsque la tension $V_p$ est minimale, l'interrupteur 508 est à nouveau fermé sur une demi-période de résonance entraînant une inversion de la polarité de la tension Vp et, grâce à la diode 504, une charge du condensateur 506 au moment où elle est maximale. Ensuite quand la capacité $C_{506}$ diminue, son énergie potentielle électrique augmente jusqu'à une valeur maximale avant d'être transférée en tout ou partie vers l'application à alimenter en un temps très court par rapport à la période de variation de la capacité $C_{506}$. Une énergie résiduelle peut être laissée dans le condensateur 506, de manière à ce que la tension Vp démarre le prochain cycle avec une valeur non nulle.

Sur la figure 7, on peut voir un schéma d'un circuit électrique d'un autre exemple avantageux de réalisation de la présente invention, permettant un démarrage du dispositif de conversion sans apport d'énergie.

Le circuit comporte un élément piézoélectrique P monté, d'une part en parallèle avec une diode 604 et un condensateur 606, et d'autre part en parallèle avec une diode 608.

L'élément piézoélectrique P et le condensateur 606 sont reliés par une de leurs bornes à un potentiel de masse 610. Le condensateur 606 est relié par son autre borne à un circuit de décharge.

Il est supposé que la tension Vp aux bornes de l'élément piézoélectrique augmente, lorsque la capacité $C_{606}$ du condensateur 606 augmente et inversement.

Lorsque la tension Vp augmente, la diode 604 devient passante et charge le condensateur 606 jusqu'à ce que la tension Vp atteigne une valeur maximale. Ensuite lorsque la capacité $C_{606}$ diminue, la charge qui a été transférée au condensateur 606 est amplifiée. Lorsque cette énergie potentielle électrique est maximale, elle est transférée, à l'aide d'un circuit de décharge, vers une application à alimenter ou une unité de stockage.

L'introduction de la diode 608 permet, lorsque la tension Vp est normalement négative, de recharger la capacité Cp de l'élément piézoélectrique P afin d'augmenter la valeur maximale de la tension Vp lors de son cycle positif.

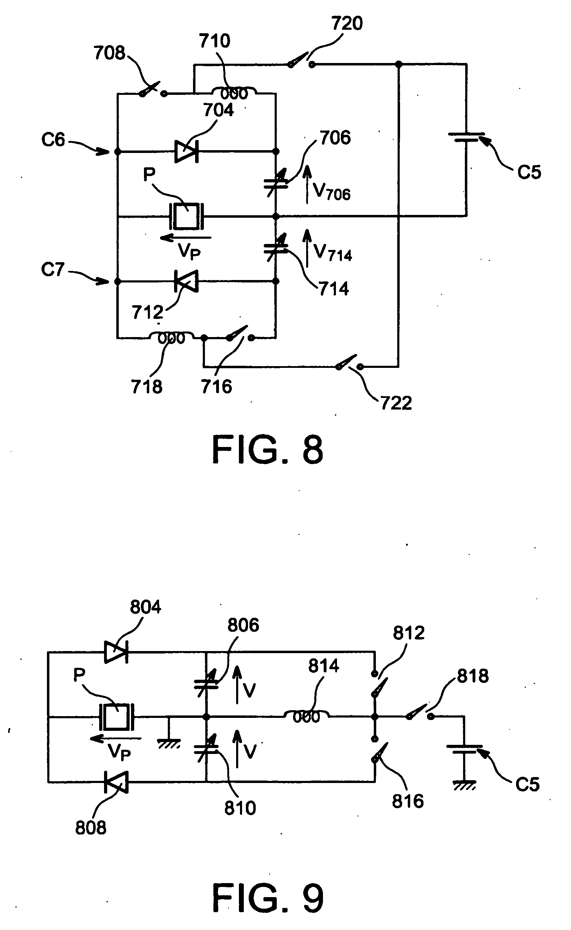

Sur la figure 8, on peut voir un schéma électrique d'une variante avantageuse de réalisation de la présente invention, permettant de rendre l'élément piézoélectrique actif pour la récupération d'énergie.

Rendre l'élément piézoélectrique actif pendant la récupération d'énergie signifie dans la présente demande, de manière similaire à la conversion électrostatique, qu'une charge électrique est injectée dans l'élément piézoélectrique de façon à créer une force piézoélectrique qui s'oppose à sa déformation. En créant ainsi une force d'opposition au déplacement, l'énergie convertie en un cycle par l'élément piézoélectrique augmente de façon significative par rapport à un fonctionnement totalement passif.

Le circuit de la figure 8 comporte un premier circuit C6 et un deuxième circuit C7. Le premier circuit C6 comporte un élément piézoélectrique P, une diode 704, un condensateur 706, un interrupteur 708 et une bobine 710. L'interrupteur 708 et la bobine 710 sont montés en parallèle avec la diode 704.

Le deuxième circuit C7 comporte l'élément piézoélectrique P, une diode 712, un condensateur 714, un interrupteur 716 et une bobine 718 montés en parallèle avec la diode 712. L'interrupteur 708 et la bobine 710 sont montés en parallèle avec la diode 704.

L'élément piézoélectrique P est relié à une unité de stockage C5. Le premier circuit C6 entre l'interrupteur 708 et la bobine 710 et le deuxième circuit C7 entre l'interrupteur 716 et la bobine 718 sont reliés à l'unité de stockage C5 par un interrupteur 720, 722 respectivement.

Lorsque tous les interrupteurs 708, 716, 720, 722 sont ouverts, le circuit fonctionne comme celui de la figure 1B. Cette configuration permet le démarrage du système, c'est à dire que, lorsque la tension Vp aux bornes de l'élément piézoélectrique augmente, le condensateur 706 se charge, puis, quand la capacité du condensateur 706 diminue, la tension $V_{706}$ aux bornes du condensateur augmente. Ensuite, lorsque la tension $V_{706}$ est maximale, au lieu de décharger entièrement la structure électrostatique vers l'unité de.stockage C5, une partie de l'énergie électrique est transférée vers l'élément piézoélectrique P. Pour cela on ferme l'interrupteur 708, ce qui a pour effet d'établir un courant entre le condensateur 706 et l'élément piézoélectrique P. Cette circulation de courant permet d'inverser la tension Vp et ainsi de créer une force mécanique de freinage au niveau de l'élément piézoélectrique P. Enfin une partie de l'énergie électrique totale (stockée dans l'élément piézoélectrique, le condensateur 706 et la bobine 710) peut être renvoyée vers l'unité de stockage en ouvrant l'interrupteur 708 et en fermant l'interrupteur 720, jusqu'à annulation du courant circulant entre le circuit C6 et l'unité de stockage C5.

Il est à noter que, du fait de la présence de la diode 704, le condensateur 706 ne peut être totalement déchargé si on veut que la capacité de l'élément piézoélectrique Cp ne soit pas complètement déchargée de façon à redémarrer le cycle suivant avec une polarisation non nulle. Cela n'est pas gênant tant que cette tension Vp reste faible devant la valeur maximale de la tension $V_{706}$. Le temps de fermeture de l'interrupteur 708 peut être réglé en fonction de la valeur de polarisation que l'on souhaite au niveau de l'élément piézoélectrique P et de l'énergie que l'on souhaite transférer vers l'unité de stockage C5 à chaque cycle. De par la symétrie de la structure, un fonctionnement similaire existe grâce au circuit C7, lorsque le déplacement de l'élément piézoélectrique se fait dans l'autre sens de manière similaire au dispositif de la figure 1A.

Sur la figure 9, on peut voir un schéma d'un circuit électrique d'une autre variante avantageuse de la présente invention dans lequel l'élément piézoélectrique est utilisé uniquement comme source d'énergie initiale, l'énergie étant ensuite amplifiée en plusieurs étapes à travers les capacités variables de la structure électrostatique.

Le circuit comporte un premier circuit C9 et un deuxième circuit C10. Le circuit C9 comporte un élément piézoélectrique P, une diode 804 et un condensateur à capacité variable 806.

Le deuxième circuit C10 comporte un élément piézoélectrique P, une diode 808 et un condensateur à capacité variable 810.

Le condensateur 806 est monté en parallèle avec un interrupteur 812 et une bobine 814.

Le condensateur 810 est monté en parallèle avec un interrupteur 816 et la bobine 814.

La bobine 814 est également reliée à une unité de stockage C5 par un interrupteur 818.

Au départ, la tension $V_{806}$ aux bornes du condensateur 806 est nulle. Lorsque la tension aux bornes de l'élément piézoélectrique Vp devient positive, il y a charge initiale du condensateur 806, puis l'énergie associée à cette charge est amplifiée par la diminution de la capacité du condensateur 806. Lorsque la capacité du condensateur 806 atteint sa valeur minimale, c'est à dire lorsque la tension $V_{806}$ est maximale, l'énergie potentielle électrique du condensateur 806 est transférée, tout d'abord, dans l'inductance 814, en fermant l'interrupteur 812, puis de l'inductance 814 vers le condensateur 810, en fermant l'interrupteur 816. En outre, puisque lorsque la capacité du condensateur 806 est minimale, la capacité du condensateur 810 est maximale, il y a à nouveau augmentation de l'énergie potentielle électrique au cours de la diminution de la capacité du condensateur 810.

Les temps de transfert de l'énergie d'une capacité à l'autre devant la période mécanique sont considérés comme négligeables, c'est à dire que les fréquences de résonance du circuit formé par la bobine 814 et le condensateur 806 et du circuit formé par la bobine 814 et le condensateur 810 sont beaucoup plus élevées que la fréquence d'oscillation mécanique de la partie mobile. Ensuite, lorsque l'énergie potentielle du condensateur 810 atteint sa valeur maximale, son énergie est transférée vers le condensateur 806.

Les transferts entre les deux condensateurs 806, 810 se poursuivent jusqu'à ce que le niveau d'amplification devienne suffisant. A chaque période mécanique, l'excédant d'énergie est transféré vers une unité de stockage C5. Ceci peut se faire à partir de l'énergie stockée temporairement dans la bobine 816, puis transférée en partie ou totalement vers l'unité de stockage C5 en fermant l'interrupteur 818.

De par la symétrie du montage, la charge initiale peut se faire par le deuxième circuit, avec une tension Vp négative aux bornes de l'élément piézoélectrique.

Ce dispositif présente l'avantage d'avoir un démarrage s'effectuant avec une tension très faible au niveau ce l'élément piézoélectrique, de l'ordre de quelques dixièmes de volts (tension légèrement supérieure aux tensions de seuil des diodes 806 et 810).

Le fonctionnement des dispositifs, notamment de celui de la figure 2A, a été décrit en considérant une force de compression, mais la conversion d'une énergie appliquée sous forme d'une force de traction visant à écarter les couches 410, 412 est également réalisable.

La présente invention ne se limite pas aux microsystèmes, elle s'applique également aux systèmes de taille métrique ainsi qu'aux systèmes de taille nanométrique.

**Description pour les Etats contractants suivants : DE, FR, IT**

**DOMAINE TECHNIQUE ET ART ANTÉRIEUR**

La présente invention se rapporte principalement à un procédé et un dispositif de conversion d'énergie mécanique, notamment vibratoire en énergie électrique à rendement amélioré.

Il est connu, par exemple du document «Vibration-to-Electric Energy Conversion », Meninger, S. ; Mure-Miranda, J. O. ; Amirtharajah, R. ; Chandrakasan, A. ; Lang, JH ; Very Scale Integration (VLSI) Systems, IEEE Transactions on, Volume 9, Issue 1, Feb. 2001 Page(s): 64-76, un dispositif de récupération d'énergie mécanique sous forme de vibration en énergie électrique, comportant une pluralité de condensateurs à capacité variable, formé par deux éléments en regard portés respectivement par un peigne fixe et un peigne mobile, le peigne mobile étant mis en mouvement sous l'effet, des vibrations extérieures et modifiant l'entrefer entre les deux éléments et ainsi la capacité des condensateurs.

Ainsi en générant des forces électrostatiques entre les armatures du condensateur, il est possible de récupérer une énergie électrique.

Il est également connu d'utiliser un matériau piézo-électrique pour transformer une énergie mécanique en énergie électrique, l'énergie mécanique provoquant la déformation du matériau piézoélectrique et l'apparition de charges électriques dans le matériau, qui peuvent être récupérées.

Cette récupération par des moyens électrostatiques ou piézoélectriques n'est pas optimale.

D'ailleurs, il est connu du document «Novel Power Circuits for Piezoelectric Micro Power Generators», Jifeng Han et al., Applied Power Electronics Conference and Exposition, 2004. APEC '04. Nineteenth Annual IEEE Anaheim, CA, USA 22-26 Feb. 2004, vol. 3, p. 1541-1546, un dispositif de récupération d'énergie mécanique comportant une pluralité de condensateurs à capacité fixe dont la capacité totale est varié par un circuit qui comporte des interrupteurs.

C'est par conséquent un but de la présente invention d'offrir un procédé de récupération d'énergie électrique à partir d'une énergie mécanique à rendement augmenté par rapport aux procédés de l'état de la technique.

C'est également un but de la présente invention d'offrir un dispositif pour convertir de manière optimisée une énergie mécanique en une énergie électrique

## EXPOSÉ DE L'INVENTION

Les buts précédemment, énoncés sont atteints par un dispositif de conversion d'énergie tel que défini par la revendication 10 comportant des moyens piézoélectriques aptes à convertir une énergie mécanique en une énergie électrique, associés à des moyens électrostatiques amplifiant l'énergie électrique produite par les moyens piézoélectriques et le procédé défini par la revendication 1.

En d'autres termes, le dispositif de conversion associe un élément piézoélectrique et un condensateur à capacité variable, les charges générées par l'élément piézoélectrique lors de sa déformation sont transmises au condensateur, qui par variation de sa capacité va amplifier l'énergie électrique produite par l'élément piézoélectrique.

La variation de la capacité est obtenue par déplacement relatif des armatures du condensateur. Lors de la diminution de la capacité du condensateur, la charge électrique crée des forces électrostatiques tendant à freiner le mouvement des armatures du condensateur, transformant ainsi une partie de l'énergie mécanique en énergie électrique. Ainsi l'énergie électrique produite par l'élément piézoélectrique lors de sa déformation est amplifiée lors de la diminution de la capacité du condensateur.

De manière avantageuse, la structure de conversion d'énergie mécanique en énergie électrique combine les principes de conversion électrostatique et piézoélectrique de manière synchronisée. En effet si lors de la déformation de l'élément piézoélectrique, il se produit une variation de capacité, il est possible d'amplifier par la structure électrostatique l'énergie acquise par l'élément piézoélectrique, puis éventuellement de la réinjecter vers l'élément piézoélectrique pour subir une succession d'amplification. A chaque phase d'amplification, une force de freinage (électrostatique ou piézoélectrique) apparaît ; elle est à chaque fois plus importante et permet ainsi de convertir plus d'énergie mécanique en énergie électrique.

La variation de capacité mécanique utilisée par l'invention n'est pas une simple variation de capacité telle que l'on pourrait l'avoir avec des capacités commutées, mais un acte de transduction d'énergie mécanique en énergie électrique. En effet, la commutation de capacité connue dans l'état de la technique permet d'élever le potentiel électrique d'une source d'énergie électrique, mais aucunement son niveau d'énergie. En effet, l'augmentation de la tension induit une baisse du courant de sortie entretenant une puissance moyenne de sortie égale à la puissance moyenne d'entrée, le produit tension-courant restant constant, il s'agit d'une conversion électrique/électrique d'énergie et aucunement d'une conversion mécanique/électrique. Par contre, grâce à la présente invention, avec une diminution par déformation mécanique de capacité, non seulement le potentiel électrique est augmenté, mais aussi l'énergie électrique stockée ; l'énergie mécanique apportée pour déformer la capacité est en fait transformée en énergie électrique amplifiant ainsi l'énergie électrique initialement stockée dans la capacité.

Avec une diminution de capacité par déformation mécanique, l'énergie électrique est amplifiée, alors qu'avec un système à capacité commutée tel que décrit sur le document EP 1 050 955, seule la tension est amplifiée. Dans le cas de l'invention, lorsque la capacité mécanique se déforme et diminue en valeur alors que la charge stockée Q sur ses électrodes reste constante (circuit temporairement ouvert), la tension U, qui est égale à la charge stockée Q divisée par la valeur de la capacité C, augmente, de même, l'énergie électrique stockée $E_{capa} = \dfrac{1}{2} QU$ augmente quand U augmente, c'est à dire quand C diminue.

$$E_{capa} = \frac{1}{2} CU^2 = \frac{1}{2} QU = \frac{Q^2}{2C}$$

Donc lorsque Q est constante et la capacité C diminue, $E_{capa}$ augmente.

Un système à capacité commuté, qui fait par exemple transiter des capacités de parallèle en série a un comportement différent d'une variation de capacité par variation mécanique. En effet, lorsque les capacités sont en parallèle, la charge est répartie sur toutes les capacités, leur mise en série ne modifie en rien cette répartition, la capacité équivalente a bien diminuée, mais on ne retrouve qu'une partie de la charge sur les bornes externes.

Une mise en série de dix capacités identiques pré-chargées conduit à une tension multipliée par 10, mais aussi à une charge équivalente divisé 10 et à une énergie stockée $\frac{1}{2}QU$ inchangée. Ce qui est normale puisque aucune énergie extérieure n'a été apportée au système.

Dans le cadre de la présente invention, l'énergie convertie par la variation mécanique de capacité est donc significative par rapport à l'énergie convertie par l'élément piézoélectrique.

De préférence, à un extremum de capacité de l'élément électrostatique correspond un extremum de tension aux bornes de l'élément piézoélectrique. A l'aide de moyens électroniques simples, ceci permet de façon efficace de transférer à l'élément électrostatique l'énergie convertie par l'élément piézoélectrique au moment où la valeur de capacité est maximale. Cette énergie est ensuite amplifiée durant la phase où la capacité diminue.

En effet, si en plus de la synchronisation entre la conversion électrostatique et la conversion piézoélectrique, à chaque extremum de capacité sur la structure électrostatique il se produit un extremum de déformation de l'élément piézoélectrique, alors ces phases d'amplification peuvent s'effectuer de manière optimisée. Pour cela il suffit de transférer, lorsque la déformation est maximale, l'énergie potentielle électrique stockée dans l'élément piézoélectrique vers la structure électrostatique qui est à une valeur capacitive maximale. Ensuite, pendant que la structure électrostatique passe de sa valeur capacitive maximale à sa valeur minimale, il y a augmentation de l'énergie potentielle électrique au sein de cette structure. Lorsque cette énergie potentielle est maximale, soit elle est transférée vers un circuit de stockage (batterie) soit elle est réinjectée dans l'élément piézoélectrique pour quelle soit à nouveau amplifiée.

Le système peut servir à récupérer l'énergie de vibration mécanique dans des milieux courant (voiture, machine outil, etc...), de l'ordre de quelques microwatts par gramme de masse mobile avec un rendement de l'ordre de 20 %.

Le dispositif selon la présente invention permet, en outre, de manière avantageuse de pouvoir démarrer sans que cela nécessite une source d'énergie électrique initiale, tout en ayant les avantages des structures électrostatiques en terme de couplage mécanique/électrique en petite dimension.

La présente invention a alors principalement pour objet un procédé de conversion d'énergie mécanique en énergie électrique, au moyen d'au moins un élément piézoélectrique et d'au moins un condensateur à capacité variable, ledit procédé comportant les étapes définies par la revendication 1.

De manière avantageuse, la déformation de l'élément piézoélectrique et la modification de la capacité du condensateur sont simultanées.

En outre, de manière également très avantageuse, la déformation de l'élément piézoélectrique est maximale lorsque la capacité du condensateur est maximale.

La capacité est modifiée par déformation mécanique du condensateur. L'élément piézoélectrique et le condensateur peuvent alors être déformés par une même contrainte mécanique.

On peut prévoir qu'une partie de l'énergie électrique convertie par le condensateur soit transmise à l'élément piézoélectrique.

Les charges peuvent également être transférées vers un premier ou un deuxième condensateur en fonction d'une direction de déformation de l'élément piézoélectrique.

Il peut également être prévu, lorsqu'une tension à des bornes de l'élément piézoélectrique est maximale, que son signe soit inversé pour créer une force de freinage mécanique permettant d'augmenter l'énergie convertie sur un cycle de conversion suivant.

Une quantité d'énergie en excès par rapport audit niveau d'amplification est alors transférée à une unité de stockage ou d'utilisation.

De manière très avantageuse, le transfert de charges de l'étape c) est commandé par une diode ou un interrupteur muni d'un circuit de commande.

La présente invention a également pour objet un dispositif de conversion d'énergie mécanique en énergie électrique, tel que défini par la revendication 10.

Les moyens de commande de transfert de charges sont avantageusement formés par au moins une diode ou au moins un interrupteur muni d'un circuit de commande.

L'élément piézoélectrique et les armatures du condensateur sont avantageusement sensiblement parallèles de manière à être soumis à la même contrainte mécanique.

Dans un exemple de réalisation, le dispositif selon l'invention comporte une partie mobile par application d'une contrainte mécanique munie de doigts de part et d'autre de son axe de déplacement, deux parties fixes munies également de doigts venant en regard des doigts de la partie mobile, les éléments piézoélectriques étant perpendiculaires au déplacement de la partie mobile et reliés électriquement à la partie mobile, les paires de doigts en regard formant deux ensembles de condensateurs en série dont les capacités varient en sens inverse.

Dans un autre exemple de réalisation du dispositif selon l'invention, l'élément piézoélectrique est sous forme d'une membrane souple suspendue à distance d'une électrode électrostatique, de manière à ce que l'électrode électrostatique et une deuxième électrode de l'élément piézoélectrique forment un condensateur à capacité variable par déformation de la membrane.

Le dispositif selon l'invention peut également comporter une structure stratifiée dans laquelle le condensateur est formé par une alternance de premières électrodes à un premier potentiel, de couches en matériau électriquement isolant et de deuxièmes électrodes à un deuxième potentiel, le matériau électriquement isolant étant élastiquement déformable et dans lequel l'élément piézoélectrique forme une couche de la structure stratifiée.

L'élément piézoélectrique comporte avantageusement une couche en matériau piézoélectrique et une première et une deuxième électrode de part et d'autre de la couche en matériau piézoélectrique.

Le matériau piézoélectrique peut être choisi parmi les céramiques : PZT ($PbZrTiO_3$) ou PLZT (PZT avec lanthane) ou $BaTiO_3$, parmi les nanocristaux (PZN-PT ou PMN-PT), parmi les polymères (PVDF) ou les AFC (Active Fiber Composite).

## BRÈVE DESCRIPTION DES DESSINS

La présente invention sera mieux comprise à l'aide de la description qui va suivre et des dessins annexés, sur lesquels :

- la figure 1A est une vue de dessus d'une représentation schématique d'un exemple de réalisation d'un dispositif selon l'invention,
- la figure 1B est un exemple de schéma électrique correspondant au dispositif de la figure 1A,
- la figures 1C représente les variations de capacités en picofarad des condensateurs du dispositif des figures 1A et 1B en fonction du temps en milliseconde lorsque l'élément piézoélectrique est déformé, ainsi que la déformation en micromètre de l'élément piézoélectrique,
- la figures 1D représente les variations du potentiel aux bornes des condensateurs du dispositif des figues 1A et 1B en fonction du temps lorsque l'élément piézoélectrique est déformé,
- la figure 1E est une modélisation du fonctionnement électrique d'un élément piézoélectrique,
- la figure 2A est une représentation schématique en perspective d'un autre exemple de réalisation d'un dispositif de récupération d'énergie selon la présente invention,
- la figure 2B est un schéma électrique de principe dé base d'un dispositif selon l'invention,
- la figure 3 est une représentation schématique en perspective d'un autre exemple de réalisation de la présente invention,
- la figure 4 est une représentation schématique d'un autre exemple de réalisation de la présente invention,
- la figure 5A est une représentation schématique d'un autre exemple de réalisation de la présente invention,
- les figures 5B et 5C sont des vues de détail du dispositif de la figure 5A,
- la figure 5D est un exemple de schéma électrique correspondant au dispositif de la figure 5A,
- la figure 6 est un exemple d'un schéma électrique correspondant à un autre exemple,
- la figure 7 est un exemple d'un schéma électrique correspondant à un autre exemple de réalisation de la présente invention,
- la figure 8 est un exemple d'un schéma électrique correspondant à un autre exemple de réalisation de la présente invention,
- la figure 9 est un exemple d'un schéma électrique correspondant à un autre exemple de réalisation de la présente invention.

## EXPOSÉ DÉTAILLÉ DE MODES DE RÉALISATION PARTICULIERS

Dans toute la description, on entend par « déformable », un élément apte à se déformer élastiquement sous une charge donnée, le matériau de l'élément étant choisi en fonction des contraintes susceptibles d'être subies par le dispositif de récupération.

Sur les figures 1A et 1B, on peut voir un exemple de réalisation de l'invention comportant une partie mobile 202 et deux parties fixes 204, 206 entourant la partie mobile 202, les parties mobile et fixes étant interdigitées.

Les parties fixes et la partie mobile sont réalisées en matériau conducteur.

La partie mobile 202 comporte un corps 208 d'axe Z muni d'une pluralité de doigts 210 s'étendant de part et d'autre de l'axe Z et perpendiculaires à celui-ci. Les parties fixes 204, 206 sont parallèles à l'axe Z et comportent des doigts 212, 214 perpendiculaires à l'axe Z. Les doigts 212 de la partie fixe 204 sont en regard des faces 210.1 situées à la droite des doigts 210 sur le dessin et les doigts 214 sont en regard des faces 210.2 situées à la gauche des doigts 210 sur le dessin.

La partie mobile 202 peut se déplacer le long de l'axe Z vers la droite et vers la gauche. Ainsi lorsque la partie mobile 202 se déplace vers la droite, les doigts 210 s'éloignent des doigts 212 et se rapprochent des faces 214. Lorsque la partie mobile 202 se déplace vers la gauche, les doigts 210 se rapprochent des doigts 212 et s'éloignent des doigts 214.

La partie mobile 202 est reliée à un support 216 par des bras déformables 218, de manière à autoriser les déplacements selon l'axe Z. Quant aux parties fixes 204, 206, celles-ci sont reliées rigidement au support 216.

Des éléments piézoélectriques P sont disposés sur les bras 218 de manière à être également déformés lorsque la partie mobile 202 se déplace ; ils sont électriquement en série ou en parallèle. Les éléments piézoélectriques P comportent un matériau piézoélectrique et deux électrodes de part et d'autre du matériau piézoélectrique.

L'ensemble des doigts 212 de la partie fixe 204 et des doigts 210 de la partie mobile 202 forment une première série de condensateurs, dont la capacité augmente lorsque la partie mobile 202 se déplace vers la droite.

L'ensemble des doigts 214 de la partie fixe 206 et 210 de la partie mobile 202, en regard forme une deuxième série de condensateurs dont la capacité augmente lorsque la partie mobile 202 se déplace vers la gauche.

Nous considérerons pour la suite de l'exposé que, lorsque la partie mobile 202 se déplace vers la droite, la tension $V_p$ aux bornes de l'élément piézoélectrique augmente et lorsque la partie mobile se déplace vers la gauche, la tension $V_p$ aux bornes de l'élément piézoélectrique diminue.

Sur la figure 1B, on peut voir un exemple de circuit électrique pouvant être associé au dispositif de la figure 1A. Le circuit électrique est composé de deux sous-circuits C1, C2. Le premier sous-circuit C1 comporte l'élément piézoélectrique P, montée en série avec une première diode 224 et un premier condensateur 226 à capacité variable $C_{226}$. Le condensateur 226 représente le condensateur équivalent à la succession de condensateurs formés par les doigts 210 et 212. Le deuxième sous-circuit C2 comporte le même élément piézoélectriques 22 également monté en série avec une deuxième diode 228 et un deuxième condensateur 230 à capacité $C_{230}$ variable. Le deuxième condensateur représente le condensateur équivalent aux condensateurs formés par les doigts 210 et 214. Les première 224 et deuxième 228 diodes sont montées de manière opposée pour permettre chacune le passage d'un courant de sens opposé.

Ainsi lorsque la tension $V_p$ aux bornes de l'élément piézoélectrique P augmente, la diode 224 devient passante, et lorsque tension $V_p$ aux bornes de l'élément piézoélectrique P diminue, c'est au tour de la diode 228 de devenir passante.

Dans l'exemple représenté, les circuits C1 et C2 sont reliés chacun à une unité de stockage C5 ou à une application distincte, mais on peut prévoir de les relier à la même unité ou à la même application.

Nous allons maintenant décrire le fonctionnement de ce dispositif.

Lorsque le support 216 est soumis à des vibrations mécaniques, la partie mobile se déplace selon l'axe Z de gauche à droite. Le déplacement de la partie mobile provoque la déformation de l'élément piézoélectrique P. Il y a alors apparition d'une tension aux bornes de celui-ci, les charges produites sont alors transmises à l'un ou l'autre des condensateurs à capacité variable, qui amplifie l'énergie électrique récupérée du fait de la variation de la capacité et de la variation du potentiel à ses bornes.

Ainsi dans chaque direction de déplacement, un élément piézoélectrique P est déformé, provoquant la conversion de l'énergie mécanique en énergie électrique.

Dans l'exemple représenté, les moyens de commande de transfert de charge sont formés par des diodes 224, 228, mais on pourrait prévoir, par exemple des interrupteurs munis d'un circuit de commande.

Dans le cas d'une diode, ce transfert s'effectue de manière continue à partir d'une valeur de charge minimale. Tandis que dans le cas d'un interrupteur de commande, ce transfert s'effectue d'un seul coup environ au moment où le potentiel entre les électrodes de l'élément piézoélectrique est maximum. L'interrupteur nécessite d'être commandé à l'inverse des diodes qui deviennent passantes automatiquement.

Sur la figure 1E, on peut voir un schéma électrique modélisant de manière simplifiée le fonctionnement électrique d'un élément piézoélectrique.

Ce circuit comporte un condensateur 222.1 de capacité $C_p$ et un générateur de tension alternative 222.2 formé par le matériau piézoélectrique déformé.

Sur la figure 1C, on peut voir les variations des capacités aux bornes des condensateurs 226 (Courbe III), 230 (courbe IV), et la déformation de l'élément piézoélectrique (courbe V) en fonction du temps.

Sur la figure 1D, on peut voir la variation du potentiel aux bornes de condensateurs 226 (courbe I, II) et 230 (courbe I', II').

Lorsque la partie mobile 202 se déplace vers la droite, l'élément piézoélectrique P est déformée et la tension Vp aux bornes de l'élément piézoélectrique P augmente et rend la diode 304 conductrice (partie I, figure 1D). La tension $V_{226}$ aux bornes du condensateur 226 suit donc la tension Vp par un transfert progressif des charges électriques stockées dans le condensateur P.1 de l'élément piézoélectrique de la figure 1B vers le condensateur 226. Ensuite, lorsque la déformation de l'élément piézoélectrique atteint une valeur maximale, la tension Vp aux bornes de cet élément commence à diminuer alors que la tension $V_{226}$ au contraire augmente (partie II de la figure 1D), ce qui engendre le blocage de la diode 224. Cette augmentation de $V_{226}$ est liée au fait que lorsque la partie mobile 202 se déplace vers la gauche, la capacité $C_{226}$ diminue (partie II', figure 1D), le condensateur 226 étant alors isolé électriquement du reste, de par le blocage de la diode 224, sa charge $Q_{226}=C_{226}V_{226}$ reste constante. Si cette charge $Q_{226}$ est constante et la capacité $C_{226}$ diminue, alors la tension $V_{226}$ augmente. Lorsque la tension $V_{226}$ atteint une valeur maximale, un circuit de décharge traditionnel (structure de type Flyback ou autre) peut être utilisé pour transférer l'énergie de cette charge vers l'unité de stockage C5 ou directement vers l'application à alimenter.

L'énergie électrique $E_{226}$ acquise durant cette phase de décroissance de la capacité $C_{226}$ vaut $1/2Q_{226}$ ($V_{226max}$-$V_{226min}$) ou encore $1/2Q_{226}$ ($1/C_{226min}$-$1/C_{226max}$). La charge $Q_{226}$ est la charge transférée par l'élément piézoélectrique P au condensateur 226 jusqu'au moment où la tension aux bornes de l'élément piézoélectrique commencé à décroître (début de la partie II, figure 1D) ; la tension $V_{226max}$ est la tension aux bornes du condensateur 226 à la fin de la partie II (figure 1D) ; la tension $V_{226min}$ est la tension aux bornes du condensateur 226 au début de la partie II (figure 1D) ; la capacité $C_{226min}$ est la capacité du condensateur 226 à la fin de la partie II (figure 1D) ; la capacité $C_{226max}$ est la capacité du condensateur 226 au début de la partie II (figure 1D).

Pour détecter les extrema de tension au niveau de l'élément piézoélectrique P ou de la structure électrostatique, il suffit par exemple de détecter le passage de la dérivée de cette tension d'une valeur positive à une valeur négative.

En outre, le dispositif offre avantageusement une symétrie, ainsi un fonctionnement similaire intervient dans le circuit C2 lorsque la tension Vp devient négative, c'est-à-dire lorsque la partie mobile 202 se déplace vers la gauche. Cette symétrie de construction permet ainsi de récupérer de l'énergie dans les deux sens de déplacement. On peut cependant prévoir un seul circuit.

De manière avantageuse, il est prévu que la tension Vp aux bornes de l'élément piézoélectrique soit maximale lorsque la capacité du condensateur 226, 230 est maximale. La conversion est alors optimisée, puisque les valeurs des tensions $V_{226}$ pour le calcul de l'énergie électrique convertie sont les valeurs extrêmes aux bornes du condensateur 226.

En effet, si la tension Vp de l'élément piézoélectrique P devenait maximale avant ou après la capacité $C_{226}$ du condensateur 226, les valeurs des tensions $V_{226}$ aux bornes du condensateurs 226 ne seraient pas les valeurs extrêmes, mais des valeurs se trouvant sur la partie II (Figure 1D) dans l'intervalle ] $V_{226min}$; $V_{226}$max [.

De plus de manière avantageuse, la conversion opérée par l'élément piézoélectrique et la conversion opérée par les condensateurs 226, 230 sont synchronisées, puisque la déformation de l'élément piézoélectrique P et des condensateurs 226, 230 résultent des mêmes efforts mécaniques externes, ceux-ci provoquant l'apparition d'une différence de potentiel aux bornes de l'élément piézoélectrique, et la variation de capacité des condensateurs 226, 230.

Le dispositif selon la présente invention présente par ailleurs l'avantage par rapport à un système électrostatique de l'état de la technique, de pouvoir démarrer sans nécessité de disposer d'une source énergie électrique initiale, puisque celle-ci est fournie par l'élément piézoélectrique lorsqu'il est déformé par la partie mobile 202.

Par ailleurs, le cycle de charge actif de l'état de la technique est source de pertes électriques dues à la consommation du circuit électrique qui permet de puiser l'énergie dans une unité de stockage déjà chargée, de détecter l'instant de charge de la capacité et d'injecter cette énergie dans le dispositif. Selon l'invention, le cycle de charge actif est avantageusement remplacé par un cycle de charge totalement passif et naturellement synchronisé. Puisque la conversion d'énergie s'effectue majoritairement au travers de la structure électrostatique, l'élément piézoélectrique, qui a pour fonction principale d'injecter une petite charge initiale dans la structure électrostatique, n'a pas besoin d'être très performant.

Sur la figure 2A, on peut voir un autre exemple de réalisation d'un dispositif selon la présente invention, comportant un élément piézoélectrique P et une électrode 4 électrostatique. L'élément piézoélectrique P et l'électrode 4 sont sensiblement parallèles et séparés par un matériau diélectrique, par exemple de l'air. L'élément piézoélectrique P et l'électrode fixe 4 sont fixés par leurs extrémités longitudinales à un support 6. L'élément piézoélectrique P et l'électrode fixe 4 sont isolés électriquement.

L'élément piézoélectrique P comporte un matériau piézoélectrique 9, par exemple une membrane en polymère piézoélectrique type PVDF, une première 8 et une deuxième 10 électrode de part et d'autre de la membrane. La deuxième électrode 10 est en vis-à-vis de l'électrode fixe 4 de manière à former un condensateur 12.

L'élément piézoélectrique P est apte à se déformer sous l'application d'une charge mécanique selon la direction Z, cette déformation provoquant un déplacement de la deuxième électrode 10 et donc une variation de la distance d entre l'électrode fixe 4 et l'électrode mobile 10. Le condensateur 12 est donc à capacité variable par application d'un effort mécanique sur la membrane 9.

Sur la figure 2B, on peut voir un schéma électrique de principe de base d'un dispositif selon l'invention, par exemple le dispositif de la figure 1A. Des moyens de commande du transfert de charge 20 sont disposés dans le circuit. Ces moyens sont, par exemple du type diode ou interrupteur muni d'un circuit de commande. Ces moyens 20 autorisent le transfert de charge de l'élément piézoélectrique P vers le condensateur 12.

Lorsqu'un effort est exercé sur l'élément piézoélectrique P selon Z, la membrane piézoélectrique 9 se déforme, provoquant l'apparition d'un potentiel électrique entre les première 8 et deuxième 10 électrodes. Cette déformation de l'élément piézoélectrique P engendre le rapprochement de la deuxième électrode 10 et de l'électrode fixe 4, et une augmentation de capacité du condensateur 12.

Le fonctionnement est identique à celui décrit en relation avec les figures 1A à 1E.

La charge générée par la déformation de l'élément piézoélectrique P est transférée au condensateur 10. Puis, lorsque l'effort cesse de s'exercer sur l'élément piézoélectrique P, le condensateur reprend sa position repos, les électrodes 4 et 10 s'écartent provoquant une diminution de la capacité.

Cette variation de capacité associée à une variation du potentiel aux bornes du condensateur 12, permet de récupérer une énergie électrique qui peut être stockée ou directement utilisée par une application déterminée.

La déformation de l'élément piézoélectrique P est synchronisée avec la variation de capacité d'un élément électrostatique, puisque c'est la même énergie mécanique extérieure qui provoque la variation de capacité et la déformation de l'élément piézoélectrique.

Ce dispositif peut, par exemple servir à récupérer l'énergie de pression ou de chocs pouvant s'exercer sur une membrane, telle que celle résultant de l'appui tactile sur un interrupteur..., la variation de pression d'un gaz, la variation de pression d'un vaisseau sanguin, ou encore la chute d'une goutte de pluie sur l'élément piézoélectrique.

Sur la figure 3, on peut voir un autre exemple de réalisation d'un dispositif selon la présente invention comportant un support 104 en forme de U allongé, dont des extrémités intérieures 106, 108 des branches portent des électrodes électrostatiques 110, 112 en vis-à-vis. Le dispositif comporte également un élément piézoélectrique P fixé sur le fond du U. L'élément piézoélectrique P comporte deux parties 114, 116 en matériau piézoélectrique comportant respectivement sur leur face externe une électrode 118, 120 et fixées par leur face interne à une première extrémités d'une poutre 122 en matériau conducteur s'étendant parallèlement aux branches du U. La poutre comporte à sa deuxième extrémité une masse mobile 124 disposée entre les électrodes électrostatiques 110, 112. La masse 124 comporte des faces conductrices 126, 128 en regard respectivement des électrodes 110, 112, et séparées de celles-ci par un matériau diélectrique, par exemple de l'air.

Les faces 126, 128 et les électrodes 110, 112 forment respectivement des condensateurs, dont la capacité peut varier lorsque la masse 124 se déplace entre les branches du U.

Ainsi, le dispositif peut servir, grâce à l'inertie de la masse mobile 124, à récupérer de l'énergie électrique si le support 104 est soumis à des vibrations mécaniques. Lorsque le support 104 est soumis à des vibrations mécaniques, la masse 124 oscille entre les branches du U, provoquant une déformation des parties piézoélectriques 114, 116 et donc l'apparition d'un potentiel électrique entre les électrodes 118,120 et l'électrode commune 122 et simultanément une variation de la capacité des condensateurs.

La poutre étant conductrice, le potentiel de l'électrode 122 se retrouve sur les électrodes 1126, 128.

Il est alors possible de récupérer une énergie électrique en associant un circuit électrique, par exemple comme celui de la figure 1B.

Le fonctionnement est identique à celui du dispositif de la figure 1A.

Sur la figure 4, on peut voir un autre exemple de réalisation d'un dispositif de conversion de contrainte mécanique en énergie électrique, ayant une structure en sandwich formée par une pluralité de couches.

Le dispositif comporte un élément piézoélectrique P muni, de part et d'autre d'un matériau piézoélectrique 404, d'électrodes 406,408. Le dispositif comporte également une structure multicouches comportant des premières couches conductrices 410 à un même potentiel $U_{410}$ alternées avec des deuxièmes couches conductrices 412 à un même potentiel $U_{412}$, séparées par des couches isolantes 414 déformables. Cette structure est déposée sur l'élément piézoélectrique.

Le potentiel $U_{410}$ est différent du potentiel $U_{412}$.

Les premières 410 et deuxièmes 412 couches conductrices forment avec les couches isolantes 414, une succession de condensateurs à capacité variable, électriquement en parallèle.

L'électrode 406 est en contact électrique avec l'électrode 410.

Un côté opposé à celui de l'élément piézoélectrique est destiné à recevoir une contrainte mécanique variable selon la direction Z.

Lorsqu'une contrainte s'applique au sandwich, il y a augmentation de l'énergie potentielle électrique aux bornes de l'élément piézoélectrique P et une augmentation de la capacité électrostatique de par le rapprochement des couches 410, 412. Le rapprochement de ces couches 410, 412 est rendu possible par le choix d'un isolant électrique très souple, par exemple en caoutchouc, qui sous la contrainte va permettre aux couches 410, 412 de se rapprocher.

Comme pour le dispositif de la figure 1A, l'énergie électrique produite par l'élément piézoélectrique P est transférée vers le condensateur 416 lorsqu'elle est maximale. L'énergie potentielle électrique est alors amplifiée durant le relâchement de la contrainte appliquée sur le dispositif.

Lors de la compression, l'élément piézoélectrique convertit une partie de l'énergie mécanique en énergie électrique et au relâchement de la contrainte, c'est le condensateur ou la partie électrostatique qui amplifie cette conversion.

On peut également parler de structure électrostatique. En effet, lorsque les couches conductrices 410, 412 sont rapprochées l'une de l'autre, elles reçoivent une charge électrique provenant de l'élément piézoélectrique P. Cette charge électrique crée alors des forces électrostatiques tendant à empêcher les couches conductrices de s'éloigner, transformant ainsi une partie de l'énergie potentielle mécanique acquise lors de la compression en énergie potentielle électrique. Cette énergie potentielle électrique acquise peut alors être utilisée pour alimenter un circuit électronique, un actionneur ou une unité de stockage d'énergie.

Sur les figures 5A, 5B et 5C, on peut voir une représentation d'un exemple de réalisation pratique d'un dispositif selon la présente invention de forme similaire à celle du dispositif de la figure 1A.

Pour des raisons de simplification, nous reprendrons les mêmes références que celles utilisées sur la figure 1A.

Les bras 218 sont formés par les éléments piézoélectriques P s'étendant perpendiculairement à l'axe de déplacement Z sur toute la largeur du support. Les éléments piézoélectriques P sont par exemple encastrés par leurs extrémités entre le support et les parties fixes 204, 206, comme on peut le voir sur le détail de la figure 5B. Une couche 223 de matériau isolant électrique est interposée entre les éléments piézoélectriques P et les parties fixes 204, 206. Les éléments piézoélectriques comportent une électrode 234 disposée d'un côté d'un matériau piézoélectrique 232, cette électrode est reliée électriquement à la partie mobile 202, deux électrodes 236, 238. disposées de l'autre côté du matériau piézoélectrique 232.

Les électrodes 236, 238 sont connectées ensemble à un même potentiel électrique.

Le dispositif comporte avantageusement des butées 239 pour éviter un court-circuit par un contact entre les doigts en fin de course.

Il est à noter que le dispositif de conversion d'énergie peut comporter un nombre de doigts plus grand que celui représenté.

Les dimensions indiquées sur les figures 5A à 5C sont données uniquement à titre d'exemple et ne sont aucunement limitatives.

La partie mobile 202 a une largeur de 300 $\mu$m et une longueur de 7000 $\mu$m. Les doigts sont espacés de 150 $\mu$m et ont une hauteur de 1200 $\mu$m. Le dispositif peut avoir une épaisseur de 400 $\mu$m, comporter 46 doigts de chaque côté de la partie mobile 202 et peser environ 1 g. L'entrefer entre les doigts peut varier entre 1 $\mu$m et 50 $\mu$m.

Lorsque la partie mobile 202 se déplace vers la droite du dessin selon Z par rapport aux parties fixes 204, 206, il y a augmentation de la capacité entre la partie mobile 202 et la partie fixe 204, et diminution de la capacité entre la partie mobile 202 et la partie fixe 206. Il y a également en même temps, déformation, notamment étirement, des éléments piézoélectriques P.

Nous considérons que les électrodes 234 des éléments piézo-électriques sont au même potentiel électrique que la partie mobile 202.

Lorsque les éléments piézoélectriques P s'étirent, nous considérons que par symétrie les potentiels des électrodes 236, 238 augmentent de la même manière et peuvent être connectés ensemble à un potentiel électrique V.

Le système peut être réalisé partiellement ou totalement par les technologies de la microélectronique ou à plus grande échelle avec les techniques classiques de fabrication (usinage, moulage ou autres).

Sur la figure 5D, on peut voir un circuit électrique adapté à la structure mécanique du circuit de la figure 5A.

Celui-ci comporte en plus du circuit représenté en figure 1B, un exemple d'un circuit de décharge C3 de l'énergie électrique récupérée par conversion de l'énergie mécanique vers une unité de stockage C5 d'énergie électrique, et avantageusement un circuit de source électrique secondaire C4 pour l'actionnement du circuit de décharge C3 au démarrage.

Le circuit de décharge C3 est relié en parallèle aux circuits C1 et C2. Le circuit de décharge comporte un interrupteur K1, K2 en série avec une bobine L1, L2, respectivement en parallèle avec le circuit C1, C2. Il comporte également, reliée à l'interrupteur K1, K2 une diode $D_S$ et une bobine $L_S$ en série avec l'unité de stockage C5. Les bornes L1, L2 et $L_S$ ont de plus le même circuit magnétique.

Une diode $D_P$ est également montée en parallèle avec l'élément piézoélectrique P.

Le circuit de source secondaire C4 comporte, par exemple deux diodes 224' et 228' reliées d'une part aux diodes 224 et 228 et d'autre part à une source E' rechargeable par les diodes 224' et 228'.

A chaque fois que la capacité $C_{226}$ ou $C_{230}$ atteint une valeur maximale $C_{226max}$ ou $C_{230max}$, l'élément piézoélectrique P atteint aussi une déformation maximale et produit une tension Vp positive susceptible de précharger le condensateur 226, 230 dont la capacité a atteint une valeur maximale.

L'énergie de la charge injectée est alors amplifiée par la décroissance de la valeur de la capacité du condensateur 226, 230 préchargé ou de la croissance de la tension, aux bornes du condensateur 226, 230, de la même manière que pour le dispositif de la figure 1A.

Quand la tension aux bornes du condensateur 226, 230 atteint une valeur maximale, son énergie électrique est alors transférée vers l'unité de stockage C5 à l'aide du circuit de décharge C3, en fermant, sur un quart de période de résonance (L1C$_{226}$ ou L2C$_{230}$), l'interrupteur K1, K2 correspondant. L'énergie potentielle électrique acquise par le condensateur 226, 230 est alors transférée vers le circuit de décharge C3 à travers l'interrupteur K1 ou K2, puis du circuit de décharge C3 vers l'unité de stockage C5 à travers la diode $D_s$.

Si au démarrage l'unité de stockage C5 est vide, l'énergie nécessaire à la commande des interrupteurs K1 et K2 peut être fournie par la source secondaire E' qui se charge naturellement avec les diodes 224' et 228'. Ensuite, dès que l'unité de stockage C5 a atteint une tension suffisante, elle peut alimenter la commande de ces interrupteurs.

La diode Dp a pour rôle de réinjecter sur l'électrode 222.3 de l'élément piézoélectrique P, les charges transférées précédemment sur le condensateur 226 ou 230.

Pour minimiser les pertes, les diodes sont choisies de préférence avec un faible seuil, une faible résistance à l'état passant et une haute impédance en tension inverse, ce sont par exemple des diodes de type Schottky. Les transistors sont de préférence choisis avec une faible résistance à l'état passant, une très grande impédance à l'état ouvert et une faible capacité parasite, par exemple ce sont des transistors de type MOSFET ou JFET.

Concernant l'élément piézoélectrique, le matériau utilisé, son épaisseur et sa longueur sont choisis de telle manière qu'ils soient capables de fournir suffisamment de tension et de courant pour effectuer la précharge de la structure électrostatique comportant les circuits C1 et C2, et qu'ils conduisent de préférence à une résonance de la structure électrostatique dans la plage fréquentielle des vibrations mécaniques ou mouvements relatifs que l'on cherche à récupérer.

Le matériau piézoélectrique peut être choisi parmi les céramiques : PZT ($PbZrTiO_3$) ou PLZT (PZT avec lanthane) ou $BaTiO_3$, parmi les nanocristaux (PZN-PT ou PMN-PT), parmi les polymères (PVDF) ou les AFC (Active Fiber Composite).

Le circuit magnétique du transformateur inductif est choisi de telle manière qu'il puisse stocker l'énergie acquise par le condensateur 226 ou 230 sur un cycle. Le nombre de spires de la bobine L1, L2 et Ls placé sur ce circuit magnétique est tel que les temps de charge/décharge du circuit magnétique soient négligeables par rapport à la période mécanique du déplacement relatif. Ce nombre de spires dépend entre autre de la valeur de $C_{226min}$, $C_{230min}$ et de la tension aux bornes de l'unité de stockage C5.

On peut prévoir, par exemple, que la période de résonance des circuits $L1C_{226min}$ et $L2C_{230min}$ soit de l'ordre de la microseconde, c'est à dire très faible par rapport à celle des vibrations mécaniques de quelques millisecondes de période.

Nous allons, sur la base des dimensions du dispositif données ci-dessus, déterminer l'énergie récupérable par le dispositif selon l'invention.

La surface capacitive du condensateur 226 ou 230 est égale à :

$$S = 46 * 0,4 * 1 = 18,4 \text{ mm}^2$$

$$C_{226min} = C_{230min} = e_0 S / d_{max} = e_0 * 18,4 \text{ mm}^2 / 50 \text{ } \mu m = 3,3 \text{ pF}.$$

$$C_{226max} = C_{230max} = e_0 S / d_{min} = e_0 * 18,4 \text{ mm}^2 / 1 \text{ } \mu m = 162,7 \text{ pF}$$

$d_{max}$ et $d_{min}$ sont respectivement les distances d'entrefer maximale et minimale entre deux doigts des condensateurs $C_{226}$ et $C_{230}$ lors du déplacement.

Si la fréquence de résonance est prise égale à $f_r = 50$Hz, alors la raideur globale k des éléments piézoélectriques par rapport à un déplacement selon Z dé la partie mobile 202 est égale à :

$$k = M(2?f_r)^P = 10^{-3}(2?50)^P = 98,7 \text{ N/m}.$$

L'énergie mécaniquement disponible sur un cycle avec A l'amplitude du déplacement relatif est égale à $E_{dispo} \sim 1/2kA^2$.

Dans le cas le plus favorable (celui qui génère le plus d'énergie), A vaut $(d_{max}-d_{min})/P = 24,5 \text{ } \mu m$.

Ainsi $E_{dispo} \sim 1/2kA^2 = 1/2*98,7*(24,85*10^{-6})^2 = 29,6 \text{ nJ}$.

L'énergie convertible électriquement en un cycle par la structure électrostatique vaut :

$$E_C = \frac{1}{2}\frac{C_{max}}{C_{min}}(C_{max} - C_{min})V^2_{charge} = 4.10^{-9}V^2_{charge}$$

Si l'on souhaite que l'énergie convertible électriquement soit égale à l'énergie disponible mécaniquement, ce qui correspond à un amortissement proche de 1 : $E = E_{dispo}$, ainsi $V^2_{charge} = 2.7$ V.

L'énergie à injecter dans la structure électrostatique ($C_{226}$ ou $C_{230}$) pour effectuer la précharge vaut :

$$\mathrm{E}_{\text{précharge}} \;=\; \frac{1}{2} C_{max} V^2{}_{charge} = 0{,}6\,nJ \;.$$

Il suffit alors que les éléments piézoélectriques soient capables, pour un déplacement relatif d'amplitude 24.5 μm de produire, à chaque cycle, une énergie de 0.6 nJ sous 2.7 V, ce qui correspond à une énergie 49 fois inférieure à celle qui sera convertie par la structure électrostatique. Il apparaît donc que les poutres piézoélectriques n'ont en fait ici pour rôle électrique que d'amorcer le fonctionnement de la structure de conversion électrostatique.

Puisque l'énergie électrique convertie par les éléments piézoélectriques ne représente que 2% de l'énergie mécanique disponible, le choix des matériaux piézoélectriques pourra ainsi se faire en tenant principalement compte de leur compatibilité avec les technologies de fabrication utilisées en microélectronique.

La puissance récupérable avec un tel système à 50 Hz et à pleine amplitude est :

$$\mathrm{P}_{\text{récupérable50Hz}} \;=\; 29{,}6.10^{-9}*2*50 \;=\; 2{,}96 \quad \mu\mathrm{W},$$

puisque nous avons deux cycles par période mécanique, un cycle avec le condensateur $C_{226}$ et un cycle avec le condensateur $C_{230}$.

La présente invention permet de gagner 20% de rendement par rapport à un système uniquement électrostatique.

Sur la figure 6, on peut voir un schéma d'un circuit électrique utilisable pour exploiter l'association d'éléments piézoélectriques et électrostatique synchronisés selon un mode avantageux.

Le circuit comporte un élément piézoélectrique P, une diode 504, un condensateur 506 à capacité variable $C_{506}$, et un interrupteur 508 et une bobine 510 en parallèle avec l'élément piézoélectrique P. La tension aux bornes de l'élément piézoélectrique P est $V_P$ et la tension aux bornes de condensateur 506 est $V_{506}$.

Nous considérons ici que la capacité du condensateur 506 augmente lorsque Vp diminue inversement.

On prévoit, dans cet exemple de réalisation, d'actionner l'interrupteur 508 pour inverser la tension aux bornes de l'élément piézoélectrique et pour améliorer le rendement du dispositif.

Lorsque la tension Vp est maximale, la tension aux bornes de l'élément piézoélectrique P peut être inversée en fermant l'interrupteur 508 sur une demi-période de résonance du circuit formé par la bobine 510 et la capacité de l'élément piézoélectrique P. Cette inversion du signe des charges stockées dans l'élément piézoélectrique P entraîne l'apparition d'une force de freinage mécanique qui permet d'augmenter l'énergie convertie sur le cycle suivant. Ce cycle correspond à la phase pendant laquelle la tension $V_p$ diminue. Ensuite lorsque la tension $V_p$ est minimale, l'interrupteur 508 est à nouveau fermé sur une demi-période de résonance entraînant une inversion de la polarité de la tension Vp et, grâce à la diode 504, une charge du condensateur 506 au moment où elle est maximale. Ensuite quand la capacité $C_{506}$ diminue, son énergie potentielle électrique augmente jusqu'à une valeur maximale avant d'être transférée en tout ou partie vers l'application à alimenter en un temps très court par rapport à la période de variation de la capacité $C_{506}$. Une énergie résiduelle peut être laissée dans le condensateur 506, de manière à ce que la tension Vp démarre le prochain cycle avec une valeur non nulle.

Sur la figure 7, on peut voir un schéma d'un circuit électrique d'un autre exemple avantageux, permettant un démarrage du dispositif de conversion sans apport d'énergie.

Le circuit comporte un élément piézoélectrique P monté, d'une part en parallèle avec une diode 604 et un condensateur 606, et d'autre part en parallèle avec une diode 608.

L'élément piézoélectrique P et le condensateur 606 sont reliés par une de leurs bornes à un potentiel de masse 610. Le condensateur 606 est relié par son autre borne à un circuit de décharge.

Il est supposé que la tension Vp aux bornes de l'élément piézoélectrique augmente, lorsque la capacité $C_{606}$ du condensateur 606 augmente et inversement.

Lorsque la tension Vp augmente, la diode 604 devient passante et charge le condensateur 606 jusqu'à ce que la tension Vp atteigne une valeur maximale. Ensuite lorsque la capacité $C_{606}$ diminue, la charge qui a été transférée au condensateur 606 est amplifiée. Lorsque cette énergie potentielle électrique est maximale, elle est transférée, à l'aide d'un circuit de décharge, vers une application à alimenter ou une unité de stockage.

L'introduction de la diode 608 permet, lorsque la tension Vp est normalement négative, de recharger la capacité Cp de l'élément piézoélectrique P afin d'augmenter la valeur maximale de la tension Vp lors de son cycle positif.

Sur la figure 8, on peut voir un schéma électrique d'une variante avantageuse de réalisation de la présente invention, permettant de rendre l'élément piézoélectrique actif pour la récupération d'énergie.

Rendre l'élément piézoélectrique actif pendant la récupération d'énergie signifie dans la présente demande, de manière similaire à la conversion électrostatique, qu'une charge électrique est injectée dans l'élément piézoélectrique de façon à créer une force piézoélectrique qui s'oppose à sa déformation. En créant ainsi une force d'opposition au déplacement, l'énergie convertie en un cycle par l'élément piézoélectrique augmente de façon significative par rapport à un fonctionnement totalement passif.

Le circuit de la figure 8 comporte un premier circuit C6 et un deuxième circuit C7. Le premier circuit C6 comporte un élément piézoélectrique P, une diode 704, un condensateur 706, un interrupteur 708 et une bobine 710. L'interrupteur 708 et la bobine 710 sont montés en parallèle avec la diode 704.

Le deuxième circuit C7 comporte l'élément piézoélectrique P, une diode 712, un condensateur 714, un interrupteur 716 et une bobine 718 montés en parallèle avec la diode 712. L'interrupteur 708 et la bobine 710 sont montés en parallèle avec la diode 704.

L'élément piézoélectrique P est relié à une unité de stockage C5. Le premier circuit C6 entre l'interrupteur 708 et la bobine 710 et le deuxième circuit C7 entre l'interrupteur 716 et la bobine 718 sont reliés à l'unité de stockage C5 par un interrupteur 720, 722 respectivement.

Lorsque tous les interrupteurs 708, 716, 720, 722 sont ouverts, le circuit fonctionne comme celui de la figure 1B. Cette configuration permet le démarrage du système, c'est à dire que, lorsque la tension Vp aux bornes de l'élément piézoélectrique augmente, le condensateur 706 se charge, puis, quand la capacité du condensateur 706 diminue, la tension $V_{706}$ aux bornes du condensateur augmente. Ensuite, lorsque la tension $V_{706}$ est maximale, au lieu de décharger entièrement la structure électrostatique vers l'unité de.stockage C5, une partie de l'énergie électrique est transférée vers l'élément piézoélectrique P. Pour cela on ferme l'interrupteur 708, ce qui a pour effet d'établir un courant entre le condensateur 706 et l'élément piézoélectrique P. Cette circulation de courant permet d'inverser la tension Vp et ainsi de créer une force mécanique de freinage au niveau de l'élément piézoélectrique P. Enfin une partie de l'énergie électrique totale (stockée dans l'élément piézoélectrique, le condensateur 706 et la bobine 710) peut être renvoyée vers l'unité de stockage en ouvrant l'interrupteur 708 et en fermant l'interrupteur 720, jusqu'à annulation du courant circulant entre le circuit C6 et l'unité de stockage C5.

Il est à noter que, du fait de la présence de la diode 704, le condensateur 706 ne peut être totalement déchargé si on veut que la capacité de l'élément piézoélectrique Cp ne soit pas complètement déchargée de façon à redémarrer le cycle suivant avec une polarisation non nulle. Cela n'est pas gênant tant que cette tension Vp reste faible devant la valeur maximale de la tension $V_{706}$. Le temps de fermeture de l'interrupteur 708 peut être réglé en fonction de la valeur de polarisation que l'on souhaite au niveau de l'élément piézoélectrique P et de l'énergie que l'on souhaite transférer vers l'unité de stockage C5 à chaque cycle. De par la symétrie de la structure, un fonctionnement similaire existe grâce au circuit C7, lorsque le déplacement de l'élément piézoélectrique se fait dans l'autre sens de manière similaire au dispositif de la figure 1A.

Sur la figure 9, on peut voir un schéma d'un circuit électrique d'une autre variante avantageuse de la présente invention dans lequel l'élément piézoélectrique est utilisé uniquement comme source d'énergie initiale, l'énergie étant ensuite amplifiée en plusieurs étapes à travers les capacités variables de la structure électrostatique.

Le circuit comporte un premier circuit C9 et un deuxième circuit C10. Le circuit C9 comporte un élément piézoélectrique P, une diode 804 et un condensateur à capacité variable 806.

Le deuxième circuit C10 comporte un élément piézoélectrique P, une diode 808 et un condensateur à capacité variable 810.

Le condensateur 806 est monté en parallèle avec un interrupteur 812 et une bobine 814.

Le condensateur 810 est monté en parallèle avec un interrupteur 816 et la bobine 814.

La bobine 814 est également reliée à une unité de stockage C5 par un interrupteur 818.

Au départ, la tension $V_{806}$ aux bornes du condensateur 806 est nulle. Lorsque la tension aux bornes de l'élément piézoélectrique Vp devient positive, il y a charge initiale du condensateur 806, puis l'énergie associée à cette charge est amplifiée par la diminution de la capacité du condensateur 806. Lorsque la capacité du condensateur 806 atteint sa valeur minimale, c'est à dire lorsque la tension $V_{806}$ est maximale, l'énergie potentielle électrique du condensateur 806 est transférée, tout d'abord, dans l'inductance 814, en fermant l'interrupteur 812, puis de l'inductance 814 vers le condensateur 810, en fermant l'interrupteur 816. En outre, puisque lorsque la capacité du condensateur 806 est minimale, la capacité du condensateur 810 est maximale, il y a à nouveau augmentation de l'énergie potentielle électrique au cours de la diminution de la capacité du condensateur 810.

Les temps de transfert de l'énergie d'une capacité à l'autre devant la période mécanique sont considérés comme négligeables, c'est à dire que les fréquences de résonance du circuit formé par la bobine 814 et le condensateur 806 et du circuit formé par la bobine 814 et le condensateur 810 sont beaucoup plus élevées que la fréquence d'oscillation mécanique de la partie mobile. Ensuite, lorsque l'énergie potentielle du condensateur 810 atteint sa valeur maximale, son énergie est transférée vers le condensateur 806.

Les transferts entre les deux condensateurs 806, 810 se poursuivent jusqu'à ce que le niveau d'amplification devienne suffisant. A chaque période mécanique, l'excédant d'énergie est transféré vers une unité de stockage C5. Ceci peut se faire à partir de l'énergie stockée temporairement dans la bobine 816, puis transférée en partie ou totalement vers l'unité de stockage C5 en fermant l'interrupteur 818.

De par la symétrie du montage, la charge initiale peut se faire par le deuxième circuit, avec une tension Vp négative aux bornes de l'élément piézoélectrique.

Ce dispositif présente l'avantage d'avoir un démarrage s'effectuant avec une tension très faible au niveau ce l'élément piézoélectrique, de l'ordre de quelques dixièmes de volts (tension légèrement supérieure aux tensions de seuil des diodes 806 et 810).

Le fonctionnement des dispositifs, notamment de celui de la figure 2A, a été décrit en considérant une force de compression, mais la conversion d'une énergie appliquée sous forme d'une force de traction visant à écarter les couches 410, 412 est également réalisable.

La présente invention ne se limite pas aux microsystèmes, elle s'applique également aux systèmes de taille métrique ainsi qu'aux systèmes de taille nanométrique.

## Revendications

**Revendications pour l'(les) Etat(s) contractant(s) suivant(s): AT, BE, BG, CH, CG, CZ, DK, EE, ES, FI, GB, GR, HU, IE, IS, LI, LT, LU, LV, MC, NL, PL, PT, RO, SE, SI SK, TR**

1. Procédé de conversion d'énergie mécanique en énergie électrique, au moyen d'au moins un élément piézoélectricque (P) et d'au moins un condensateur à capacité variable (226, 230, 506 ,606, 706, 714, 806, 810), ledit procédé comportant les étapes :

   a) de déformation mécanique de l'élément piézoélectrique,
   b) de récupération de charges produites par la déformation de l'élément piézoélectrique,
   c) de transfert de charges de l'élément piézoélectrique au condensateur,
   d) de modification de la capacité du condensateur par déformation mécanique du condensateur,
   e) de récupération d'au moins une partie de l'énergie électrique.

2. Procédé selon la revendication 1, dans lequel la déformation de l'élément piézoélectrique et la modification de la capacité du condensateur sont simultanées.

3. Procédé selon la revendication 2, dans lequel la déformation de l'élément piézoélectrique est maximale lorsque la capacité du condensateur est maximale.

4. Procédé selon l'une des revendications 1 à 3, dans lequel l'élément piézoélectrique et le condensateur sont déformés par une même contrainte mécanique.

5. Procédé selon l'une quelconque de revendications précédentes, dans lequel une partie de l'énergie électrique convertie par le condensateur est transmise à l'élément piézoélectrique.

6. Procédé selon l'une quelconque des revendications précédentes, dans lequel les charges sont transférées vers un premier ou un deuxième condensateur en fonction d'une direction de déformation de l'élément piézoélectrique.

7. Procédé selon l'une quelconque des revendications précédentes, dans lequel lorsqu'une tension à des bornes de l'élément piézoélectrique est maximale, son signe est inversé pour créer une force de freinage mécanique permettant d'augmenter l'énergie convertie sur un cycle de conversion suivant.

8. Procédé selon l'une quelconque des revendications précédentes, comportant l'étape supplémentaire de transférer l'énergie électrique produite par un condensateur vers un deuxième condensateur et inversement jusqu'à atteindre un niveau d'amplification prédéterminé de l'énergie électrique.

9. Procédé selon la revendication précédente, dans lequel une quantité d'énergie en excès par rapport audit niveau d'amplification est transférée à une unité de stockage ou d'utilisation.

10. Procédé selon l'une quelconque des revendications précédentes, dans lequel le transfert de charges de l'étape c) est commandé par une diode ou un interrupteur muni d'un circuit de commande.

**11.** Dispositif de conversion d'énergie mécanique en énergie électrique, comportant au moins un élément piézoélectrique (P) et au moins un condensateur à capacité variable (226, 230, 506, 606, 706, 714, 806, 810), des moyens de commande de transfert de charges (224, 228, 504, 604, 608, 704, 712, 804, 808) entre l'élément piézoélectrique et le condensateur, de manière à ce que la charge produite lors d'une déformation de l'élément piézoélectrique (P) soit transmise au condensateur pour générer une énergie électrique amplifiée par variation de sa capacité, et **caractérisé en ce que** la capacité du condensateur est modifiée par déplacement des armatures du condensateur.

**12.** Dispositif selon la revendication précédente, dans lequel les moyens de commande de transfert de charges sont formés par au moins une diode ou au moins un interrupteur muni d'un circuit de commande.

**13.** Dispositif selon la revendication précédente, dans lequel l'élément piézoélectrique (P) et les armatures du condensateur sont sensiblement parallèles de manière à être soumis à la même contrainte mécanique.

**14.** Dispositif selon l'une quelconque des revendications 11 à 13, comportant deux condensateurs dont les capacités varient en sens inverse.

**15.** Dispositif selon l'une quelconque des revendications 11 à 14, comportant une partie mobile (202) par application d'une contrainte mécanique munie de doigts (210) de part et d'autre de son axe de déplacement, deux parties fixes (204, 206) munies également de doigts (212, 214) venant en regard des doigts (212) de la partie mobile (202), les éléments piézoélectriques (P) étant perpendiculaires au déplacement de la partie mobile (202) et reliés électriquement à la partie mobile (202), les paires de doigts en regard formant deux ensembles de condensateurs en série dont les capacités varient en sens inverse.

**16.** Dispositif selon l'une quelconque des revendications 11 à 14, dans lequel l'élément piézoélectrique (P) est sous forme d'une membrane souple suspendue à distance d'une électrode électrostatique (4), de manière à ce que l'électrode électrostatique (4) et une deuxième électrode (10) de l'élément piézoélectrique forment un condensateur à capacité variable par déformation de ladite membrane.

**17.** Dispositif selon l'une quelconque des revendications 11 à 14, comportant une structure stratifiée dans laquelle le condensateur est formé par une alternance de premières électrodes (410) à un premier potentiel, de couches (414) en matériau électriquement isolant et de deuxièmes électrodes (412) à un deuxième potentiel, le matériau électriquement isolant étant élastiquement déformable et dans lequel l'élément piézoélectrique (P) forme une couche de la structure stratifiée.

**18.** Dispositif selon l'une quelconque des revendications 11 à 17, dans lequel l'élément piézoélectrique (P) comporte une couche en matériau piézoélectrique et une première et une deuxième électrode de part et d'autre de la couche en matériau piézoélectrique, le matériau piézoélectrique étant choisi, par exemple parmi les céramiques : PZT (PbZrTiO$_3$) ou PLZT (PZT avec lanthane) ou BaTiO$_3$, parmi les nanocristaux (PZN-PT ou PMN-PT), parmi les polymères (PVDF) ou les AFC (Active Fiber Composite).

**Revendications pour l'(les) Etat(s) contractant(s) suivant(s): DE, FR, IT**

**1.** Procédé de conversion d'énergie mécanique en énergie électrique, au moyen d'au moins un élément piézoélectrique (P) et d'au moins un condensateur à capacité variable (226, 706, 806), ledit procédé comportant les étapes :

a) de déformation mécanique de l'élément piézoélectrique,
b) de récupération de charges produites par la déformation de l'élément piézoélectrique,
c) de transfert de charges de l'élément piézoélectrique au condensateur,
d) de modification de la capacité du condensateur par déformation mécanique du condensateur,
e) de récupération d'au moins une partie de l'énergie électrique,
ledit procédé comportant l'étape supplémentaire de transférer l'énergie électrique produite par le condensateur vers un deuxième condensateur (230, 714, 810) et inversement jusqu'à atteindre un niveau d'amplification prédéterminé de l'énergie électrique.

**2.** Procédé selon la revendication 1, dans lequel la déformation de l'élément piézoélectrique et la modification de la capacité du condensateur sont simultanées.

3. Procédé selon la revendication 2, dans lequel la déformation de l'élément piézoélectrique est maximale lorsque la capacité du condensateur est maximale.

4. Procédé selon l'une des revendications 1 à 3, dans lequel l'élément piézoélectrique et le condensateur sont déformés par une même contrainte mécanique.

5. Procédé selon l'une quelconque des revendications précédentes, dans lequel une partie de l'énergie électrique convertie par le condensateur est transmise à l'élément piézoélectrique.

6. Procédé selon l'une quelconque des revendications précédentes, dans lequel les charges sont transférées vers un premier ou un deuxième condensateur en fonction d'une direction de déformation de l'élément piézoélectrique.

7. Procédé selon l'une quelconque des revendications précédentes, dans lequel lorsqu'une tension à des bornes de l'élément piézoélectrique est maximale, son signe est inversé pour créer une force de freinage mécanique permettant d'augmenter l'énergie convertie sur un cycle de conversion suivant.

8. Procédé selon l'une des revendications 1. à 7, dans lequel une quantité d'énergie en excès par rapport audit niveau d'amplification est transférée à une unité de stockage ou d'utilisation.

9. Procédé selon l'une quelconque des revendications précédentes, dans lequel le transfert de charges de l'étape c) est commandé par une diode ou un interrupteur muni d'un circuit de commande.

10. Dispositif de conversion d'énergie mécanique en énergie électrique, comportant au moins un élément piézoélectrique (P) et au moins un premier condensateur à capacité variable (226, 706, 806) et un deuxième condensateur à capacité variable (230, 714, 810), le premier et le deuxième condensateur présentant des capacités variant en sens inverse, des moyens de commande de transfert de charges entre l'élément piézoélectrique et le premier condensateur et le deuxième condensateur, de manière à ce que la charge produite lors d'une déformation de l'élément piézoélectrique (P) soit transmise au premier condensateur ou au deuxième condensateur pour générer une énergie électrique amplifiée par variation de sa capacité, et dans lequel la capacité du premier ou du deuxième condensateur est modifiée par déplacement des armatures du premier condensateur ou du deuxième condensateur, ledit dispositif comportant des moyens de transfert de l'énergie électrique (224, 228, 704, 712, 804, 808) produire par le premier condensateur ou le deuxième condensateur vers le deuxième ou le premier condensateur respectivement et inversement jusqu'à atteindre un niveau d'amplification prédéterminé de l'énergie électrique.

11. Dispositif selon la revendication précédente, dans lequel les moyens de commande de transfert de charges sont formés par au moins une diode ou au moins un interrupteur muni d'un circuit de commande.

12. Dispositif selon la revendication précédente, dans lequel l'élément piézoélectrique (P) et les armatures du condensateur sont sensiblement parallèles de manière à être soumis à la même contrainte mécanique.

13. Dispositif selon l'une quelconque des revendications 10 à 12, comportant une partie mobile (202) par application d'une contrainte mécanique munie de doigts (210) de part et d'autre de son axe de déplacement, deux parties fixes (204, 206) munies également de doigts (212, 214) venant en regard des doigts (212) de la partie mobile (202), les éléments piézoélectriques (P) étant perpendiculaires au déplacement de la partie mobile (202) et reliés électriquement à la partie mobile (202), les paires de doigts en regard formant deux ensembles de condensateurs en série dont les capacités varient en sens inverse.

14. Dispositif selon l'une quelconque des revendications 10 à 12, dans lequel l'élément piézoélectrique (P) est sous forme d'une membrane souple suspendue à distance d'une électrode électrostatique (4), de manière à ce que l'électrode électrostatique (4) et une deuxième électrode (10) de l'élément piézoélectrique forment un condensateur à capacité variable par déformation de ladite membrane.

15. Dispositif selon l'une quelconque des revendications 10 à 12, comportant une structure stratifiée dans laquelle le condensateur est formé par une alternance de premières électrodes (410) à un premier potentiel, de couches (414) en matériau électriquement isolant et de deuxièmes électrodes (412) à un deuxième potentiel, le matériau électriquement isolant étant élastiquement déformable et dans lequel l'élément piézoélectrique (P) forme une couche de la structure stratifiée.

**16.** Dispositif selon l'une quelconque des revendications 10 à 15, dans lequel l'élément piézoélectrique (P) comporte une couche en matériau piézoélectrique et une première et une deuxième électrode de part et d'autre de la couche en matériau piézoélectrique, le matériau piézoélectrique étant choisi, par exemple parmi les céramiques : PZT (PbZrTiO$_3$) ou PLZT (PZT avec lanthane) ou BaTiO$_3$, parmi les nanocristaux (PZN-PT ou PMN-PT), parmi les polymères (PVDF) ou les AFC (Active Fiber Composite).

## Claims

**Claims for the following Contracting State(s): AT, BE, BG, CH, CG, CZ, DK, EE, ES, FI, GB, GR, HU, IE, IS, LI, LT, LU, LV, MC, NL, PL, PT, RO, SE, SI SK, TR**

**1.** Method for converting mechanical energy into electrical energy, by means of at least one piezo-electric element (P) and at least one capacitor of variable capacity (226, 706, 806), wherein said method comprises the steps:

> a) of mechanical deformation of the piezo-electric element,
> b) of recovery of the charges produced by the deformation of the piezo-electric element,
> c) of a transfer of charge from the piezo-electric element to the capacitor,
> d) of modification of the capacity of the capacitor by mechanical deformation of the capacitor,
> e) of recovery at least part of the electrical energy;
> said method comprising the additional step of transferring the electrical energy produced by a capacitor to a second capacitor (230, 714, 810) and vice versa until a predetermined level of amplification of the electrical energy is reached.

**2.** Method of claim 1, wherein the deformation of the piezo-electric element and the modification of the capacity of the capacitor are simultaneous.

**3.** Method of claim 2, wherein the deformation of the piezo-electric element is at maximum when the capacity of the capacitor is at maximum.

**4.** Method according to any of claims 1 to 3, wherein the piezo-electric element and the capacitor are deformed by a same mechanical constraint.

**5.** Method according to any of the previous claims, wherein part of the electrical energy converted by the capacitor is transmitted to the piezo-electric element.

**6.** Method according to any of the previous claims, wherein the charges are transferred to a first or a second capacitor as a function of a direction of deformation of the piezo-electric element.

**7.** Method according to any of the previous claims, wherein when the voltage at the terminals of the piezo-electric element is at maximum, its sign is inverted so as to create a mechanical braking force permitting the energy converted in a following conversion cycle to be increased.

**8.** Method according to any of claims 1 to 7, wherein an excess quantity of energy with respect to said level of amplification is transferred to a storage or operational unit.

**9.** Method according to any of the previous claims, wherein the transfer of charges of step c) is controlled by a diode or a switch equipped with a control circuit.

**10.** Device for converting mechanical energy into electrical energy, comprising at least one piezo-electric element (P) and at least a first capacitor of variable capacity (226, 706, 806) and a second capacitor of variable capacity (230, 714, 810), the first capacitor and the second capacitor whose capacities vary inversely, means of controlling the transfer of charges between the piezo-electric element and the capacitor, such that the charge produced during a deformation of the piezo-electric element (P) is transmitted to the first or the second capacitor to generate electrical energy that is amplified by variation of its capacity, and wherein the capacity of the first or the second capacitor is modified by moving the armatures of the first or the second capacitor, said device comprising means for transferring electrical energy (224, 228, 704, 712, 804, 808) generated by the first or the second capacitor to the second or the first capacitor respectively and vice versa until a predetermined level of amplification of the electrical energy is reached.

11. Device according to the previous claim, wherein the means for controlling the transfer of the charges are formed by at least one diode or at least one switch equipped with a control circuit.

12. Device according to the previous claim, wherein the piezo-electric element (P) and the armatures of the capacitor are substantially parallel so that they are subjected to the same mechanical constraint.

13. Device according to any of claims 10 to 12, wherein it comprises a part (202) that moves by the application of a mechanical constraint, fitted with teeth (210) on either side of its axis of movement, wherein two fixed parts (204, 206) also equipped with teeth (212, 214) move opposite the teeth of the moving part (202), wherein the piezo-electric elements (P) are perpendicular to the movement of the moving part (202) and are electrically connected to the moving part (202), wherein the pairs of opposite teeth form two sets of capacitors in series whose capacities vary inversely.

14. Device according to any of claims 10 to 12, wherein the piezo-electric element (P) is in the form of a flexible membrane suspended at a distance from an electrostatic electrode (4), so that the electrostatic electrode (4) and a second electrode (10) of the piezo-electric element (P) form a capacitor of variable capacity by deformation of said membrane.

15. Device according to any of claims 10 to 12, wherein it comprises a stratified structure in which the capacitor is formed by an alternation of first electrodes (410) with a first potential, layers (414) of electrically isolating material and second electrodes (412) with a second potential, wherein the electrically isolating material is elastically deformable and in which the piezo-electric element (P) forms a layer of the stratified structure.

16. Device according to any of claims 10 to 15, wherein the piezo-electric element (P) comprises a layer of piezo-electric material and a first and a second electrode on either side of the layer of piezo-electric material, the piezo-electric material being chosen from the ceramics: PZT ($PbZrTiO_3$) or PLZT (PZT with lanthane) or $BaTiO_3$, from the nano-crystals PZN-PT or PMN-PT), from the polymers (PVDF) or AFCs (Active Fibre Composites).

**Claims for the following Contracting State(s): DE, FR, IT**

1. Method for converting mechanical energy into electrical energy, by means of at least one piezoelectric element (P) and at least one capacitor of variable capacity (226, 230, 506, 606, 706, 714, 806, 810), wherein said method comprises the steps:

   a) of mechanical deformation of the piezoelectric element,
   b) of recovery of the charges produced by the deformation of the piezo-electric element,
   c) of a transfer of charge from the piezo-electric element to the capacitor,
   d) of modification of the capacity of the capacitor by mechanical deformation of the capacitor,
   e) of recovery at least part of the electrical energy

2. Method of claim 1, wherein the deformation of the piezo-electric element and the modification of the capacity of the capacitor are simultaneous.

3. Method of claim 2, wherein the deformation of the piezo-electric element is at maximum when the capacity of the capacitor is at maximum.

4. Method according to any of claims 1 to 3, wherein the piezo-electric element and the capacitor are deformed by a same mechanical constraint.

5. Method according to any of the previous claims, wherein part of the electrical energy converted by the capacitor is transmitted to the piezo-electric element.

6. Method according to any of the previous claims, wherein the charges are transferred to a first or a second capacitor as a function of a direction of deformation of the piezo-electric element.

7. Method according to any of the previous claims, wherein when the voltage at the terminals of the piezo-electric element is at maximum, its sign is inverted so as to create a mechanical braking force permitting the energy converted in a following conversion cycle to be increased.

8. Method according to any of the previous claims, comprising the additional step of transferring the electrical energy produced by a capacitor to a second capacitor and vice versa until a predetermined level of amplification of the electrical energy is reached.

9. Method according to the previous claim, wherein an excess quantity of energy with respect to said level of amplification is transferred to a storage or operational unit.

10. Method according to the previous claim, wherein the transfer of charges of step c) is controlled by a diode or a switch equipped with a control circuit.

11. Device for converting mechanical energy into electrical energy, comprising at least one piezo-electric element (P) and at least one capacitor of variable capacity (226, 230, 506, 606,706, 714, 806, 810) and means of controlling the transfer of charges (224, 228, 504,604, 608, 704, 712,804, 808) between the piezo-electric element and the capacitor, such that the charge produced during a deformation of the piezo-electric element (P) is transmitted to the capacitor to generate electrical energy that is amplified by variation of its capacity, and **characterized in that** the capacity of the capacitor is modified by moving the armatures of the capacitor.

12. Device according to the previous claim, wherein the means for controlling the transfer of the charges are formed by at least one diode or at least one switch equipped with a control circuit.

13. Device according to the previous claim, wherein the piezo-electric element (P) and the armatures of the capacitor are substantially parallel so that they are subjected to the same mechanical constraint.

14. Device according to any of the claims 11 to 13, wherein it comprises two capacitors whose capacities vary inversely.

15. Device according to any of claims 11 to 14, wherein it comprises a part (202) that moves by the application of a mechanical constraint, fitted with teeth (210) on either side of its axis of movement, wherein two fixed parts (204, 206) also equipped with teeth (212, 214) move opposite the teeth of the moving part (202), wherein the piezo-electric elements (P) are perpendicular to the movement of the moving part (202) and are electrically connected to the moving part (202), wherein the pairs of opposite teeth form two sets of capacitors in series whose capacities vary inversely.

16. Device according to any of claims 11 to 14, wherein the piezo-electric element (P) is in the form of a flexible membrane suspended at a distance from an electrostatic electrode (4), so that the electrostatic electrode (4) and a second electrode (10) of the piezo-electric element (P) form a capacitor of variable capacity by deformation of said membrane.

17. Device according to any of claims 11 to 14, wherein it comprises a stratified structure in which the capacitor is formed by an alternation of first electrodes (410) with a first potential, layers (414) of electrically isolating material and second electrodes (412) with a second potential, wherein the electrically isolating material is elastically deformable and in which the piezo-electric element (P) forms a layer of the stratified structure.

18. Device according to any of claims 11 to 17, wherein the piezo-electric element (P) comprises a layer of piezo-electric material and a first and a second electrode on either side of the layer of piezo-electric material, the piezo-electric material being chosen from the ceramics: PZT ($PbZrTiO_3$) or PLZT (PZT with lanthane) or $BaTiO_3$, from the nano-crystals PZN-PT or PMN-PT), from the polymers (PVDF) or AFCs (Active Fibre Composites).

**Patentansprüche**

**Patentansprüche für folgende(n) Vertragsstaat(en): AT, BE, BG, CH, CG, CZ, DK, EE, ES, FI, GB, GR, HU, IE, IS, LI, LT, LU, LV, MC, NL, PL, PT, RO, SE, SI SK, TR**

1. Verfahren zur Umwandlung von mechanischer Energie in elektrische Energie mittels wenigstens eines piezoelektrischen Elements (P) und wenigstens eines Kondensators mit variabler Kapazität (226, 706, 806), wobei das genannte Verfahren folgende Schritte umfasst:

a) mechanische Verformung des piezoelektrischen Elements,
b) Gewinnung der durch die Verformung des piezoelektrischen Elements erzeugten Ladungen,
c) Transfer von Ladungen des piezoelektrischen Elements zum Kondensator,
d) Änderung der Kapazität des Kondensators durch mechanische Verformung des Kondensators,
e) Gewinnung wenigstens eines Teils der elektrischen Energie,
wobei das genannte Verfahren den zusätzlichen Schritt des Transfers der durch den Kondensator erzeugten elektrischen Energie zu einem zweiten Kondensator (230, 714, 810) und umgekehrt umfasst, bis zum Erreichen eines vorgegebenen Verstärkungsniveaus der elektrischen Energie.

2. Verfahren nach Anspruch 1, bei dem die Verformung des piezoelektrischen Elements und die Änderung der Kapazität des Kondensators simultan erfolgen.

3. Verfahren nach Anspruch 2, bei dem die Verformung des piezoelektrischen Elements maximal ist, wenn die Kapazität des Kondensators maximal ist.

4. Verfahren nach einem der Ansprüche 1 bis 3, bei dem das piezoelektrische Element und der Kondensator durch dieselbe mechanische Belastung verformt werden.

5. Verfahren nach einem der vorhergehenden Ansprüche, bei dem ein Teil der durch den Kondensator umgewandelten elektrische Energie zu dem piezoelektrischen Element übertragen wird.

6. Verfahren nach einem der vorhergehenden Ansprüche, bei dem die Ladungen in Abhängigkeit von einer Verformungsrichtung des piezoelektrischen Elements zu einem ersten oder einem zweiten Kondensator übertragen werden.

7. Verfahren nach einem der vorhergehenden Ansprüche, bei dem das Vorzeichen des piezoelektrischen Elements umgekehrt wird, wenn eine Spannung an seinen Anschlüssen maximal ist, um eine mechanische Bremskraft zu erzeugen, die ermöglicht, bei einem nachfolgenden Umwandlungszyklus die umgewandelte Energie zu erhöhen.

8. Verfahren nach einem der Ansprüche 1 bis 7, bei dem eine in Bezug auf das genannte Verstärkungsniveau überschüssige Energiemenge zu einer Speicher- oder Anwendungseinheit transferiert wird.

9. Verfahren nach einem der vorhergehenden Ansprüche, bei dem der Ladungstransfer des Schritts c) gesteuert wird durch eine Diode oder einen Schalter, ausgestattet mit einer Steuerschaltung.

10. Vorrichtung zur Umwandlung von mechanischer Energie in elektrische Energie, umfassend: wenigstens ein piezoelektrisches Element (P) und wenigstens einen ersten Kondensator mit variabler Kapazität (226, 706, 806) sowie einen zweiten Kondensator mit variabler Kapazität (230, 714, 810), wobei der erste und der zweite Kondensator entgegengesetzt variierende Kapazitäten aufweisen, Steuereinrichtungen des Ladungstransfers zwischen dem piezoelektrischen Element und dem ersten Kondensator und dem zweiten Kondensator, so dass die bei einer Verformung des piezoelektrischen Elements (P) erzeugte Ladung zu dem ersten oder dem zweiten Kondensator übertragen wird, um eine elektrische Energie zu erzeugen, verstärkt durch Änderung seiner Kapazität, und bei der die Kapazität des ersten oder des zweiten Kondensators durch Verschiebung der Beläge des ersten Kondensators oder des zweiten Kondensators geändert wird, wobei die genannte Vorrichtung Transfereinrichtungen (224, 228, 704, 712, 804, 808) der durch den ersten oder den zweiten Kondensator erzeugten Energie zu jeweils dem zweiten oder dem ersten Kondensator, und umgekehrt, umfasst, bis zum Erreichen eines vorgegebenen Verstärkungsniveaus der elektrischen Energie.

11. Vorrichtung nach dem vorhergehenden Anspruch, bei der die Ladungstransfer-Steuereinrichtungen gebildet werden durch wenigstens eine Diode oder wenigstens einen Schalter, ausgestattet mit einer Steuerschaltung.

12. Vorrichtung nach dem vorhergehenden Anspruch, bei der das piezoelektrische Element (P) und die Beläge der Kondensatoren im Wesentlichen parallel sind, so dass sie der gleichen mechanischen Belastung ausgesetzt sind.

13. Vorrichtung nach einem der vorhergehenden Ansprüche, umfassend: einen durch Anwendung einer mechanischen Belastung beweglichen Teil (202), ausgestattet mit Fingern (210) beiderseits seiner Verschiebungsachse, zwei den Fingern (212) des beweglichen Teils (202) gegenüberstehende, ebenfalls mit Fingern (212, 214) ausgestattete feststehende Teile (204, 206), wobei die piezoelektrischen Elemente (P) senkrecht sind zu der Verschiebung des beweglichen Teils (202) und elektrisch mit dem beweglichen Teil (202) verbunden sind, und die sich gegenüberstehenden Fingerpaare zwei Gruppen von Kondensatoren in Serie bilden, deren Kapazitäten in umgekehrter Richtung variieren.

14. Vorrichtung nach einem der Ansprüche 10 bis 12, bei dem das piezoelektrische Element (P) durch eine von einer elektrostatischen Elektrode (4) beabstandete nachgiebige Membran gebildet wird, so dass die elektrostatische Elektrode (4) und eine zweite Elektrode (10) des piezoelektrischen Elements durch Verformung der genannten Membran einen Kondensator mit variabler Kapazität bilden.

15. Vorrichtung nach einem der Ansprüche 10 bis 12 mit einer Schichtenstruktur, bei der der Kondensator gebildet wird durch eine Wechselfolge von ersten Elektroden (410) eines ersten Potentials, Schichten (414) aus elektrisch isolierendem Material und zweiten Elektroden (412) eines zweiten Potentials, wobei das elektrisch isolierende Material elastisch verformbar ist, und bei der das piezoelektrische Element (P) eine Schicht der Schichtenstruktur bildet.

16. Vorrichtung nach einem der Ansprüche 10 bis 15, bei der das piezoelektrische Element (P) eine Schicht aus piezoelektrischem Material und - beiderseits der Schicht aus piezoelektrischem Material - eine erste und eine zweite Elektrode umfasst, wobei das piezoelektrische Material zum Beispiel ausgewählt wird unter den Keramiken der Typen PZT ($PbZrTiO_3$) oder PLZT (mit Lanthan) oder $BaTiO_3$, unter den Nanokristallen (PZN-PT oder PMN-PT), unter den Polymeren (PVDF) oder den AFCs (Active Fiber Composite).

**Patentansprüche für folgende(n) Vertragsstaat(en): DE, FR, IT**

1. Verfahren zur Umwandlung von mechanischer Energie in elektrische Energie mittels wenigstens eines piezoelektrischen Elements (P) und wenigstens eines Kondensators mit variabler Kapazität (226, 230, 506, 606, 706, 714, 806, 810), wobei das genannte Verfahren folgende Schritte umfasst:

    a) mechanische Verformung des piezoelektrischen Elements,
    b) Gewinnung der durch die Verformung des piezoelektrischen Elements erzeugten Ladungen,
    c) Transfer von Ladungen vom piezoelektrischen Element zum Kondensator,
    d) Änderung der Kapazität des Kondensators durch mechanische Verformung des Kondensators,
    e) Gewinnung wenigstens eines Teils der elektrischen Energie,

2. Verfahren nach Anspruch 1, bei dem die Verformung des piezoelektrischen Elements und die Änderung der Kapazität des Kondensators simultan erfolgen.

3. Verfahren nach Anspruch 2, bei dem die Verformung des piezoelektrischen Elements maximal ist, wenn die Kapazität des Kondensators maximal ist.

4. Verfahren nach einem der Ansprüche 1 bis 3, bei dem das piezoelektrische Element und der Kondensator durch dieselbe mechanische Belastung verformt werden.

5. Verfahren nach einem der vorhergehenden Ansprüche, bei dem ein Teil der durch den Kondensator umgewandelten elektrische Energie zu dem piezoelektrischen Element übertragen wird.

6. Verfahren nach einem der vorhergehenden Ansprüche, bei dem die Ladungen in Abhängigkeit von einer Verformungsrichtung des piezoelektrischen Elements zu einem ersten oder einem zweiten Kondensator übertragen werden.

7. Verfahren nach einem der vorhergehenden Ansprüche, bei dem das Vorzeichen des piezoelektrischen Elements umgekehrt wird, wenn eine Spannung an seinen Anschlüssen maximal ist, um eine mechanische Bremskraft zu erzeugen, die ermöglicht, bei einem nachfolgenden Umwandlungszyklus die umgewandelte Energie zu erhöhen.

8. Verfahren nach einem der vorangehenden Ansprüche mit dem zusätzlichen Schritt, die durch einen Kondensator erzeugte Energie zu einem zweiten Kondensator zu übertragen, und umgekehrt, bis zum Erreichen eines vorgegebenen Verstärkungsniveaus der elektrischen Energie.

9. Verfahren nach einem der vorhergehenden Ansprüche, bei dem eine in Bezug auf das genannte Verstärkungsniveau überschüssige Energiemenge zu einer Speicher- oder Anwendungseinheit übertragen wird.

10. Verfahren nach einem der vorhergehenden Ansprüche, bei dem der Ladungstransfer des Schritts c) gesteuert wird durch eine Diode oder einen Schalter, ausgestattet mit einer Steuerschaltung.

11. Vorrichtung zur Umwandlung von mechanischer Energie in elektrische Energie, wenigstens ein piezoelektrisches Element (P) und wenigstens einen Kondensator mit variabler Kapazität (226, 230, 506, 606, 706, 714, 806, 810) sowie Ladungstransfer-Steuereinrichtungen (224, 228, 504, 604, 608, 704, 712, 804, 808) zwischen dem piezoelektrischen Element und dem Kondensator umfassend, so dass die bei einer Verformung des piezoelektrischen Elements (P) erzeugte Ladung zu dem Kondensator übertragen wird, um eine elektrische Energie zu erzeugen, verstärkt durch Änderung seiner Kapazität, und
**dadurch gekennzeichnet, dass** die Kapazität des Kondensators durch Verschiebung der Beläge des Kondensators verändert wird.

12. Vorrichtung nach dem vorhergehenden Anspruch, bei der die Ladungstransfer-Steuereinrichtungen gebildet werden durch wenigstens eine Diode oder wenigstens einen Schalter, ausgestattet mit einer Steuerschaltung.

13. Vorrichtung nach dem vorhergehenden Anspruch, bei der das piezoelektrische Element (P) und die Beläge der Kondensatoren im Wesentlichen parallel sind, so dass sie der gleichen mechanischen Belastung ausgesetzt sind.

14. Vorrichtung nach einem der Ansprüche 11 bis 13 mit zwei Kondensatoren, deren Kapazitäten invers variieren.

15. Vorrichtung nach einem der vorhergehenden Ansprüche, umfassend: einen durch Anwendung einer mechanischen Belastung beweglichen Teil (202), ausgestattet mit Fingern (210) beiderseits seiner Verschiebungsachse, zwei den Fingern (212) des beweglichen Teils (202) gegenüberstehende, ebenfalls mit Fingern (212, 214) ausgestattete feststehende Teile (206, 206), wobei die piezoelektrischen Elemente (P) senkrecht sind zu der Verschiebung des beweglichen Teils (202) und elektrisch mit dem beweglichen Teil (202) verbunden sind, und die sich gegenüberstehenden Fingerpaare zwei Gruppen von Kondensatoren in Serie bilden, deren Kapazitäten invers variieren.

16. Vorrichtung nach einem der Ansprüche 11 bis 14, bei dem das piezoelektrische Element (P) durch eine von einer elektrostatischen Elektrode (4) beabstandete nachgiebige Membran gebildet wird, so dass die elektrostatische Elektrode (4) und eine zweite Elektrode (10) des piezoelektrischen Elements durch Verformung der genannten Membran einen Kondensator mit variabler Kapazität bilden.

17. Vorrichtung nach einem der Ansprüche 11 bis 14 mit einer Schichtenstruktur, bei der der Kondensator gebildet wird durch eine Wechselfolge von ersten Elektroden (410) eines ersten Potentials, Schichten (414) aus elektrisch isolierendem Material und zweiten Elektroden (412) eines zweiten Potentials, wobei das elektrisch isolierende Material elastisch verformbar ist, und bei der das piezoelektrische Element (P) eine Schicht der Schichtenstruktur bildet.

18. Vorrichtung nach einem der Ansprüche 11 bis 17, bei der das piezoelektrische Element (P) eine Schicht aus piezoelektrischem Material und - beiderseits der Schicht aus piezoelektrischem Material - eine erste und eine zweite Elektrode umfasst, wobei das piezoelektrische Material zum Beispiel ausgewählt wird unter den Keramiken PZT (PbZrTiO$_3$) oder PLZT (PZT mit Lanthan) oder BaTiO$_3$, unter den Nanokristallen (PZN-PT oder PMN-PT), unter den Polymeren (PVDF) oder den AFCs (Active Fiber Composite).

FIG. 1A

FIG. 1B

FIG. 1E

FIG. 1C

FIG. 1D

FIG. 2A

FIG. 2B

FIG. 3

FIG. 4

FIG. 5A

FIG. 5B

FIG. 5C

FIG. 5D

FIG. 6

FIG. 7

FIG. 8

FIG. 9

**EP 1 977 459 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1050955 A

**Littérature non-brevet citée dans la description**

- **Meninger, S. ; Mure-Miranda, J. O. ; Amirtharajah, R. ; Chandrakasan, A. ; Lang, JH.** Vibration-to-Electric Energy Conversion. *Very Scale Integration (VLSI) Systems, IEEE Transactions,* Février 2001, vol. 9 (1), 64-76

- **Jifeng Han et al.** Novel Power Circuits for Piezoelectric Micro Power Generators. *Applied Power Electronics Conference and Exposition, 2004. APEC '04. Nineteenth Annual IEEE Anaheim,* 22 Février 2004, vol. 3, 1541-1546